# EUROPÄISCHE PATENTSCHRIFT

(11) **EP 1 579 309 B1**
(45) Veröffentlichungstag und Bekanntmachung des Hinweises auf die Patenterteilung: **13.06.2007**
(21) Anmeldenummer: 03809751.5
(22) Anmeldetag: 30.10.2003
(51) Int. Cl.: G06F 3/12

(54) **VERFAHREN, COMPUTERPROGRAMMPRODUKT UND VORRICHTUNG ZUM VERARBEITEN EINES DOKUMENTENDATENSTROMS EINES EINGANGSFORMATES ZU EINEM AUSGANGSFORMAT**
METHOD, COMPUTER PROGRAMME PRODUCT AND DEVICE FOR THE PROCESSING OF A DOCUMENT DATA STREAM FROM AN INPUT FORMAT TO AN OUTPUT FORMAT
PROCEDE, PRODUIT-PROGRAMME INFORMATIQUE ET DISPOSITIF POUR CONVERTIR UN FLUX DE DONNEES DE DOCUMENT D'UN FORMAT D'ENTREE DANS UN FORMAT DE SORTIE

(30) Priorität: 31.10.2002 DE 10250842
(43) Veröffentlichungstag der Anmeldung: 28.09.2005
(73) Patentinhaber: Océ Printing Systems GmbH, 85586 Poing (DE)
(72) Erfinder: SCHWIER, Hartwig, 81927 München (DE); ENGBROCKS, Werner, 85586 Poing (DE); HIRTENREITER, Klaus, 85386 Eching (DE); LANDMESSER, Georg, 85540 Haar (DE); FROMM, Matthias, 85570 Markt Schwaben (DE)
(74) Vertreter: Schaumburg, Karl-Heinz
(86) Internationale Anmeldenummer: PCT/EP2003/012106
(87) Internationale Veröffentlichungsnummer: WO 2004/040432

(56) Entgegenhaltungen:
- DE-A- 10 017 785
- US-A1- 2001 043 352

## Beschreibung

Die Erfindung betrifft ein Verfahren, ein Computerprogrammprodukt und ein System zur Verarbeitung von Dokumentendatenströmen. Sie betrifft insbesondere ein Verfahren und ein System zur Verarbeitung eines Druckdatenstroms, der zur Ausgabe auf einem Druckgerät aufbereitet wird. Eine derartige Aufbereitung findet typischerweise in Computern statt, die Druckdateien oder Druckdaten aus Anwenderprogrammen heraus druckerangepaßt verarbeiten. Die Druckdaten werden dabei z.B. in einem Ausgabestrom einer bestimmten Druckdatensprache wie AFP^{®} (Advanced Function Presentation), PCL^{™} oder PostScript^{™} umgewandelt. Aus SAP-Datenbankanwendungen werden Daten z.B. im Format SAP/RDI zum Drucken ausgegeben.

In Großrechenzentren werden die Druckdaten typischerweise in einem Host Computer (Main Frame) zusammengetragen (Spooling-Vorgang) und daraus große Druckaufträge (Jobs) generiert, die bis über mehrere Gigabyte an Daten beinhalten. Die Druckaufträge sind dabei derart zur Ausgabe auf Hochleistungsdrucksystemen angepaßt, daß die Hochleistungsdrucksysteme im Produktionsbetrieb zeitlich optimal ausgelastet bzw. weitgehend im kontinuierlichen Betrieb eingesetzt werden können. Der Ausdruck erfolgt dann entweder über den Host-Computer oder über angeschlossene Server.

Derartige Hochleistungsdrucker mit Druckgeschwindigkeiten von etwa 40 DIN A 4 Seiten pro Minute bis zu über 1000 DIN A 4 Seiten pro Minute sind beispielsweise in der Veröffentlichung "Das Druckerbuch", herausgegeben von Dr. Gerd Goldmann (Océ Printing Systems GmbH), Ausgabe 6, Mai 2001, ISBN 3-000-00 1019-X beschrieben. Im Kapitel 14 sind unter dem Titel Océ PRISMApro Server System Konzepte zur hochperformanten Aufbereitung und Verarbeitung von Druckdaten beschrieben.

Ein typisches Druckdatenformat in elektronischen Produktions-Druck-Umgebungen ist das Format AFP (Advanced Function Presentation), welches beispielsweise in der Publikation Nr. F-544-3884-01 der Firma International Business Machines Corp. (IBM) mit dem Titel "AFP Programming Guide and Line Data Reference" beschrieben ist. In dieser Veröffentlichung ist auch die Spezifikation für einen weiteren Datenstrom mit der Bezeichnung "S/370 Line-Mode Data" beschrieben. Der Druckdatenstrom AFP wurde weiterentwickelt zu dem Druckdatenstrom MO:DCA, welcher in der IBM-Publikation SC31-6802-04 mit dem Titel "Mixed Object Document Content Architecture Reference" beschrieben ist. Im Rahmen der vorliegenden Beschreibung wird zwischen AFP-Datenströmen und MO:DCA-Datenströmen nicht unterschieden.

Von der Anmelderin wird ein mit dem Handelsnamen PRIS-MAproduktion^{™} bezeichnetes Datenverarbeitungs-System für Hochleistungsdrucksysteme angeboten, welches in der Lage ist, Druckdatenströme aus verschiedenen Anwendungen zu verarbeiten, unter verschiedenen Betriebssystemen wie MVS^{™} oder BS 2000^{™} zu spoolen und in einen geräteorientierten Datenstrom wie z.B. IPDS^{™} (Intelligent Printer Data Stream) umzuwandeln.

Von der Firma IBM Corp. ist das unter der Bezeichnung ACIF^{™} bekannt gewordene Programm geschaffen worden, mit dem es möglich ist, Druckdatenströme zu konvertieren und zu indizieren. Die ACIF-Anwendung ist in der IBM-Broschüre G544-3824-00 mit dem Titel "Conversion and indexing facility application programming guide" sowie in der IBM-Broschüre Nr. S544-5285-00 mit der Bezeichnung "AFP conversion and indexing facility (ACIF) user's guide" beschrieben. Von der Anmelderin sind entsprechende Computerprogramme unter den Handelsnamen SPS^{™} , CIS^{™} bekannt.

Zur Ergänzung von Befehlen in der Druckdatensprache IPDS ist die US-A-6,097,498 erschienen. Mit einem WOCC Kommando können demnach Objekte aus anderen Drucksprachen wie PostScript oder PCL in einen IPDS-Datenstrom eingefügt und übertragen werden. Auch in der deutschen Patentanmeldung Nr. 102 45 530.9 ist beschrieben, wie zusätzliche Steuerungskommandos in einen Druckdatenstrom eingefügt werden können.

Aus der IBM-Veröffentlichung Nr. S544-5284-06 "IBM Page Printer Formatting Aid: User's Guide", 7^{th} edition, die z.B. unter http://publib.boulder.ibm.com/prsys/pdfs/54452846.pdf zugänglich ist, ist ein Tool bekannt, mit dem ein Anwender sogenannte "form definitions" (formdef) und "page definitions" (pagedefs) zur Formatierung von Druckdaten erzeugen kann. Von der Anmelderin wird ein entsprechendes Computerprogramm SLE^{™} (Smart Layout Editor) entwickelt und vertrieben.

Aus der WO 01/77807 A2 bzw. der korrespondierenden DE-A1-100 17 785 ist ein dem o.g. Produkt CIS^{™} entsprechendes Verfahren zur Anreicherung von Dokumentendaten bekannt, bei dem der Dokumentendatenstrom normalisiert, d.h. auf ein einheitliches Datenformat gebracht wird und Indexdaten für einen Such- oder Sortiervorgang gebildet werden. Weiterhin werden Ressourcendaten, die in dem Datenstrom enthalten sind, extrahiert und zu einer Resourcendatei zusammengefügt. Schließlich können die Daten nach vorgegebenen Suchkriterien sortiert und eine entsprechende Dokumentendatei ausgegeben werden.

In der PCT/EP02/05296 ist beschrieben, wie ein Druckdatenstrom in gerasterter Form auf einem Bildschirm dargestellt werden kann.
Aus der EP-A1-0 982 650 ist ein verteiltes Drucksystem bekannt, bei dem Druckaufträge von verschiedenen Eingängen an verschiedene Drucker eines Netzwerkes gesandt werden können. Wenn ein Druckauftrag in einer Druckdatensprache eingeht, die der vorgesehene Drucker nicht interpretieren kann, so wird der Druckauftrag in eine Sprache umgesetzt, mit der der vorgesehene Drucker kompatibel ist.

Aus der US-A-5,993,088 ist ein Verfahren bekannt, mit dem Druckaufträge zuerst gesammelt werden (spooling-Vorgang), bevor sie an einen Drucker ausgegeben werden.

Aus der DE-A1-199 11 461 ist ein Verfahren zur Ausgabe von Dokumenten-Druckdaten bekannt, bei dem zunächst variable Daten und statische Daten dokumentenweise zusammengefügt und vor der Übertragung wieder getrennt werden, damit statische Daten, die in mehreren Dokumenten vorkommen, nur einmal übertragen werden müssen.

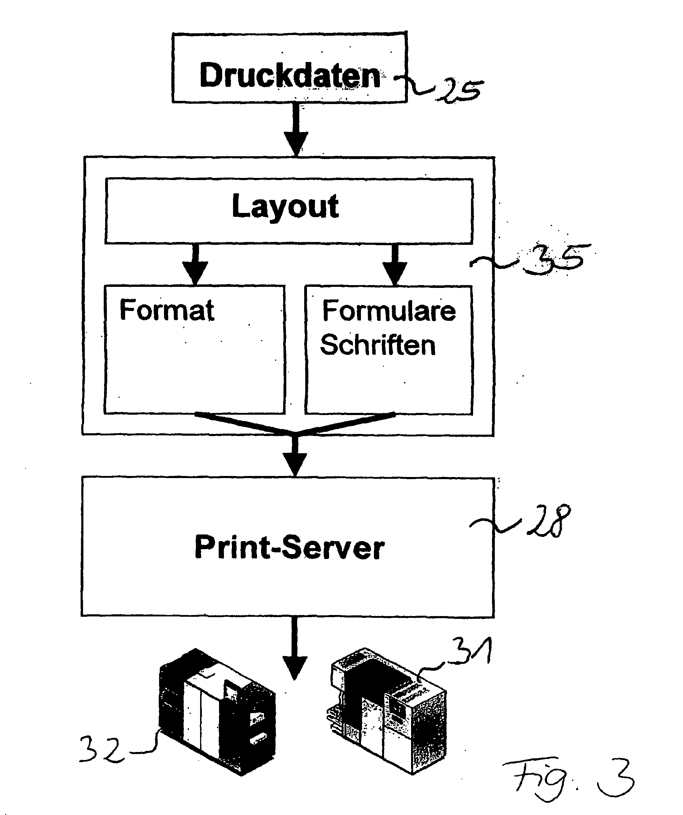

In Figuren 2 und 3 sind bekannte Verfahrensweisen zum Verarbeiten von Druckdaten dargestellt. Die Druckdaten werden dabei von einer Druckdatenquelle 25 mit einem Musterdatensatz an einen Editor, wie z. B. den Smart Layout Editor (SLE), den die Anmelderin vertreibt, gesandt. Anhand dieses Musterdatensatzes wird das Layout (Formulare, Datenplatzierung, Schriften etc.) zum Ausdruck festgelegt und ein AFP-Ressourcen-Datenstrom mit einer Formdef-Datei und Pagedef-Datei erzeugt. Der AFP-Ressourcen-Datenstrom 27 umfaßt nur einige zig- bis maximal einige hundert Kilobyte und enthält Formulare, Schriften, Seiten-Definitionen und Form-Definitionen als Befehle. Der AFP-Ressourcen-Datenstrom 27 wird dann an einen Druckaufbereitungscomputer (Printserver) 28 gesandt und dort abgespeichert. Beim späteren Ausdrucken der Druckdaten werden diese über den Druckdatenweg 29 direkt an den Printserver 28 gesandt, welcher die Druckdaten wiederum mit dem AFP-Ressourcen-Datenstrom verbindet und daraus einen IPDS-Datenstrom generiert, der an ein oder mehrere Druckgeräte 31, 32 zum Ausdruck gesandt wird.

Dieser Verarbeitungsweise liegt also das Konzept zugrunde, daß eine Trennung zwischen den zu druckenden variablen Daten und dem Ressourcen-Datenstrom erfolgt. Vorteile dieser auf AFP beruhenden Verfahrensweise sind eine hohe Verarbeitungsgeschwindigkeit und ein hoher Kompressionsgrad, da die Ressourcen-Daten als relativ kleine Datei einmalig übermittelt werden können und der Großteil der Daten (Druckdaten) ohne belastende Zusatzinformationen, wie Layouts, Formulare, Fonts (Schriften) etc., von der Druckdatenquelle 25 direkt an den Printserver 28 gesandt werden kann.

Nachteilig bei diesem auf dem IBM-Produkt Page Printer Formatting Aid (PPFA) basierenden Verfahren ist, daß nur die in PPFA vorgesehenen Druckdaten und vorgegebenen Formatieringsprinzipien verwendet werden können. Personalisierte Dokumente können zwar durch "conditional processing" erzeugt werden, hierzu muß aber für jede Verzweigung eine neue Dokumentenseite beschrieben werden. Dadurch wird die Applikationsgestaltung sehr langwierig und komplex. Insbesondere ist auf diese Art und Weise die Generierung von Kuchen- oder Balkendiagrammen nicht möglich. Dies wäre nur durch Sonderfunktionen in einem entsprechend erweiterten Druckertreiber möglich. Der Ausdruck solcher Applikationen wäre damit aber auf herstellerspezifische Systeme beschränkt, was relativ ungünstig wäre.

Ressourcen sind statisch, das heißt sie werden bei der Ausführung eines Druckauftrags weder generiert noch verändert. Weiterhin enthalten sie keine Druckdaten, beim Entwurf der Ressourcen können jedoch Druckdatenmuster verwendet werden.

In Figur 3 ist eine Datenaufbereitung nach dem sogenannten Formatter-Prinzip dargestellt. Der komplette Druckdatenstrom wird dabei von der Druckdatenquelle 25 einem Formatter 35 zugeleitet, welcher ein Layout erstellt und die Layoutangaben, wie Formularangaben, Schriftformangaben und andere Formatangaben, direkt in den Druckdatenstrom integriert. Der komplette so aufbereitete Druckdatenstrom wird dann an den Printserver 28 gesandt und von diesem an einen Drucker 31, 32 weitergeleitet. Eine derartige Verarbeitungsweise entspricht vielen im sogenannten Small-Office Home-Office (SOHO)-Bereich eingeführten Verfahrensweisen. Beispielsweise werden Druckdaten in den Microsoft-Office-Produkten WinWord^{™}, Access^{™} und Excel^{™} unter dem Betriebssystem MS Windows^{™} auf diese Weise verarbeitet.

Vorteilhaft bei dieser Art der Datenaufbereitung ist, daß praktisch beliebig komplexe Anweisungen bzw. Regeln in den Druckdatenstrom integriert werden können. Insbesondere sind Tabellen mit dynamischer Länge einschließlich Zwischen- und Endsummen möglich sowie die grafische Aufbereitung von Druckdaten durch Kuchen- bzw. Balkendiagramme etc.. Der Darstellung von Druckdaten sind dabei prinzipiell keine Grenzen gesetzt. Zudem sind über Eingangsfilter unterschiedliche Druckdaten ladbar, u. a. auch sogenannte RDI-Daten von Datenbank-Programmen der Firma SAP AG, Walldorf, Deutschland.

Nachteilig bei dieser Verfahrensweise ist, daß der Druckdatenstrom durch die Formatierungsangaben sehr umfangreich wird und damit die Übertragung der Druckdaten von einem Computer an einen anderen Computer oder an den Drucker relativ lange dauert. Weiterhin muß die Druckaufbereitung für jeden Druckauftrag einzeln erfolgen. Computerprogramme, die dieses Prinzip auf AFP-Druckdaten anwenden, müssen für jeden Druckauftrag einen vollständigen AFP-Datenstrom erzeugen, auch wenn keine Dynamik erfolgen soll. Zum Ausdrucken sind diese AFP-Datenströme in entsprechende IPDS-Datenströme für die Druckgeräte umzuwandeln. Nachteilig ist dabei, daß kleinste Änderungen am Druckauftrag eine völlige Neugenerierung des AFP-Datenstroms erzwingen.

Aus der Patentschrift DE 10017785 A1 ist bereits ein Verfahren zur Umwandlung des Formates eines Datenstromes bekannt. Dieses Verfahren benutzt dazu eine Zwischenumwandlung in einen Datenstrom mit einem internen Format. In diesem Verfahren wird aber nicht zwischen Roh- und formatierten Daten unterschieden.

Eine performante Verarbeitung und Aufbereitung von Druckdaten ist insbesondere beim Ausdrucken von Daten aus Datenbanken erforderlich. In Datenbankanwendungen, die von der Firma SAP AG, vertrieben werden, können Daten im sogenannten RDI-Format (Raw Data Interface Format) ausgegeben werden. Die Daten können dabei mit dem Tool "SAP script" teilweise formatiert werden oder auch unformatiert ausgegeben werden.

Es ist Aufgabe der Erfindung, ein Verfahren, ein Computerprogrammprodukt und ein Computersystem anzugeben, mit denen große Druckdatenströme einerseits datensatzindividuell flexibel aufbereitet und andererseits insgesamt hochperformant übertragen werden können.

Diese Aufgabe wird durch die in den unabhängigen Ansprüchen angegebene Erfindung gelöst. Vorteilhafte Ausführungsformen der Erfindung ergeben sich aus den Unteransprüchen.

Gemäß einem ersten Aspekt der Erfindung wird zum Umwandeln eines Eingangs-Dokumenten-Datenstroms, der einem von mehreren möglichen Eingangsdatenformaten entspricht, in einen Ausgangs-Dokumenten-Datenstrom, der einem aus mehreren Ausgangsdatenformaten entspricht, der Eingangs-Dokumenten-Datenstrom in ein internes Datenformat umgesetzt. Den Daten wird im internen Datenformat bedarfsweise eine Dokumentenformatierungsinformation hinzugefügt, die die Darstellung der Daten im Ausgangsformat festlegt, und die Daten dann in das Ausgangs-Datenformat umgewandelt.

Gemäß einem zweiten Aspekt der Erfindung, der unabhängig vom ersten Aspekt der Erfindung gesehen werden kann, wird zum Umwandeln eines Eingangs-Dokumentendatenstroms, der einem von mehreren möglichen Eingangsdatenformaten entspricht, in einen Ausgangs-Dokumentendatenstrom, der einem aus mehreren Ausgangsdatenformaten entspricht, der Eingangs-Dokumentendatenstrom in ein internes Datenformat wie z.B. AFP, Unicode oder PPML umgesetzt, den Daten im internen Datenformat bedarfsweise und gesteuert durch ein Dokumenten-Template, das insbesondere das Hinzufügen von Formatierungsanweisungen im internen Datenformat beschreibt, eine Dokumentenformatierungsinformation hinzugefügt, die festlegt, wie der Inhalt des Datenstroms im internen Datenformat dargestellt wird, und schließlich die Daten im Ausgangsdatenformatoausgegeben.

Gemäß einem dritten Aspekt der Erfindung, der auch unabhängig von den zuvor genannten Aspekten der Erfindung gesehen werden kann, wird zur formatangepaßten und geschwindigkeitsoptimierten Verarbeitung eines Eingangs-Dokumenten-Datenstroms dieser in ein internes Datenformat mit formatierten Daten, die Formatangaben enthalten, und Rohdaten, die keine Formatangaben enthalten, umgewandelt. Den Rohdaten werden mittels vorgegebener Regeln Formatierungsanweisungen hinzugefügt und aus den Daten des internen Datenformats ein Ausgangs-Datenstrom gebildet, der ein vorgegebenes Format hat.

Gemäß einem vierten Aspekt der Erfindung, der auch von den zuvor genannten Aspekten der Erfindung unabhängig gesehen werden kann, wird in einem Verfahren zum Verarbeiten und Aufbereiten von Dokumenten-Datenströmen in einer ersten, vorbereitenden Verarbeitungsphase ein eine bestimmte Datenstruktur aufweisender Musterdatensatz eines Dokumenten-Datenstroms mit Formatierungsanweisungen versehen und daraus eine Formatierungsinformation gebildet. In einer zweiten, produktiven Verarbeitungsphase des Dokumenten-Datenstroms wird an allen Datensätzen, deren Datenstruktur der des Musterdatensatzes entspricht, anhand der Formatierungsinformation Daten hinzugefügt und alle übrigen Daten ohne Veränderung weitergeleitet.

Als Eingangs- und/oder Ausgangs-Datenströme können bei der Erfindung alle Dokumentendatenströme verwendet werden, z. B. AFP (Advanced Function Presentation), Line Data, CSV (Comma separated Value), ODBC (Open Database Connectivity), Extended Markup Language (XML), Hypertext Markup Language (HTML), EXtensible HTML (XHTML), Personalized Printer Markup Language (PPML), PostScript, Printer Control Language (PCL), SAP RDI (Raw Data Interface), Windows Meta Code, usw. Als internes Datenformat eignen sich insbesondere AFP und PPML, es kann jedoch auch ein anderes Datenformat , z.B. XML verwendet werden.

Die Erfindung beruht auf der Erkenntnis, daß die verschiedenen, eingangs genannten Datenströme jeweils Vorteile und Nachteile haben und daß es gelingen müßte, von den jeweiligen Datenströmen jeweils die Vorzüge zu nutzen und die Nachteile durch Übernahme von Verarbeitungsprinzipien aus anderen Datenströmen zu beseitigen. Insbesondere können die auf Ressourcen basierenden Vorteile mit der Erfindung genutzt werden. Einmal erstellte Ressourcen werden bei der Ausführung eines Druckvorgangs weder generiert noch verändert. Es reicht daher, sie einmalig an einen Druckserver oder Drucker zu übertragen und sie dann vielfach auf die jeweiligen Druckdaten anzuwenden. Auch die oben bereits beschriebene Möglichkeit der Abfrage von Druckdaten und der Programmverzweigungen besteht bei der Erfindung. Weiterhin ist die relative Positionierung von Druckdaten durch Verkettung von Druckdaten möglich. Die Ressourcen müssen nur einmal erstellt werden und können beliebig oft verwendet werden, nämlich für alle Druckdaten, die eine Struktur haben, die dem zur Erstellung der Ressourcen verwendeten Musterdruckdatensatz entsprechen.

Weiterhin ist die Übertragung auf verschiedene Druckermodelle (IPDS) möglich, da allenfalls die Beschreibung der physikalischen Seite (z. B. die Formdef-Ressourcen-Datei in einem AFP-Datenstrom) ausgetauscht werden muß. Durch die Geräteunabhängigkeit eines Zwischenformates wird es auch möglich, daß keine auf einem gerätespezifischen Format beruhenden Format-anweisungen benötigt werden.

Andererseits werden mit der Erfindung auch die von dem Formatter-Prinzip bekannten Vorteile nutzbar, nämlich die Möglichkeit, praktisch beliebige Darstellungsanweisungen der Druckdaten direkt in den Datenstrom einzubinden. Derart aufbereitete Druckdaten werden dabei insbesondere in ihrem formatierten Zustand belassen und so an den Druckserver bzw. Drucker gesandt.

Mit der Erfindung wird somit eine hohe Flexibilität bei der Layout-Gestaltung von Druckdokumenten erreicht, so daß eine volldynamische Dokumentenstruktur ermöglicht wird. Es kann damit sowohl ein dynamisches Layout, das heißt die Positionierung und Darstellung von Dokumententeilen in Abhängigkeit der zugrunde liegenden Druckdaten, als auch die Integration von Layout- bzw. Formatierungsmerkmalen aus externen Quellen (Programmen) erfolgen. Weiterhin können konstante und variable Daten gemischt werden, beispielsweise in Fließtexten und Barcodes. Durch die geräteunabhängige Verarbeitung der Dokumentendaten innerhalb des Prozesses ist es möglich, ein Design auf unterschiedlichen Ausgabegeräten optimal auszugeben, wobei der jeweilige Ausgabedatenstrom druckerangepaßt und/oder formatangepaßt erfolgt.

Erfindungsgemäß ist dies dadurch gelungen, daß die aus dem AFP-Umfeld bekannte, an Ressourcen orientierte Verfahrensweise angewandt wird auf sogenannte Rohdaten, die im Eingangs-Datenstrom unformatiert zur Verfügung stehen, wobei ein- und derselbe Formatierungsvorgang für mehrere Datensätze durchzuführen ist. Des weiteren beruht die Erfindung auf der Erkenntnis, daß Datensätze, die bereits strukturiert formatiert sind, meist keiner Veränderung mehr bedürfen und direkt weitergeleitet werden können. In Sonderfällen kann jedoch auch vorgesehen sein, daß einer bereits im Datenstrom enthaltenen Formatter-Formatierung noch eine zusätzliche, auf Ressourcen basierende Formatierung hinzugefügt wird (sogenannte Huckepack-Formatierung).

In einem vorteilhaften Ausführungsbeispiel der Erfindung sind das Eingangs-Datenformat, das Ausgangs-Datenformat und/oder die hinzugefügte Dokumentenformatierungsinformation auswählbar. Dies kann insbesondere während einer Design-Phase geschehen, während der auch das zur Steuerung der Ergänzungsformatierung verwendete Dokumenten-Template gemäß dem zweiten Aspekt der Erfindung erzeugt oder modifiziert werden kann.

Weiterhin ist es vorteilhaft, wenn die Daten des Eingangs-Dokumentendatenstroms für die weitere Bearbeitung aufgeteilt werden in vorformatierte Daten, die bereits eine Dokumentenformatierungsinformation aufweisen, und Rohdaten, die keine Dokumentenformatierungsinformation aufweisen. Die vorformatierten Daten werden vorzugsweise in einer ersten Formatierungsstufe verarbeitet, in der sie insbesondere nicht verändert werden und die Rohdaten in einer zweiten Verarbeitungsstufe, in der ihnen die Dokumentenformatierungsinformationen entsprechend einem anhand eines Musterdatensatzes erzeugten Dokumenten-Templates hinzugefügt werden. Die Rohdaten können dabei Objekten zugeordnet werden, wobei die Objekte insbesondere grafische Elemente, wie z. B. Kuchendiagramme, Balkendiagramme, Rahmen, Tabellen und/oder Farben umfassen können.

Die Dokumentenformatierungsinformation kann insbesondere eine Papierwiedergabeinformation, wie z. B. N-Up und/oder Duplex umfassen. Weiterhin vorteilhaft an der erfindungsgemäßen Verwendung eines Dokumenten-Templates ist, daß es unabhängig vom Format des Eingangs-Dokumenten-Datenstroms ist und somit formatunabhängig verwendbar ist. Dokumenten-Templates greifen insbesondere auf den Design-Datensatz zu. Ihre Verwendung ist daher weniger fehleranfällig bei der Ergänzung von Zeilen etc. als z. B. bei reinen Zeilendaten.

Weiterhin kann die Dokumentenformatierungsinformation eine Druckvor- und/oder Nachverarbeitungsinformation enthalten. Als Ausgangsdatenstrom ist inbesondere ein Advanced Function Presentation Datenstrom vorgesehen, bei dem eine erste Gruppe von Formatierungsinformationen über eine Pagedef-Datei zur Verfügung gestellt wird und eine zweite Gruppe von Formatierungsinformationen im variablen Datenstrom enthalten ist.

Weitere Aspekte und Vorteile der Erfindung werden im Zusammenhang mit der nun folgenden Beschreibung von Ausführungsbeispielen und den zugehörigen Figuren deutlich.

Es zeigen:
Figur 1 ein Hochleistungsdrucksystem,
Figur2 die bekannte Verfahrensweise zur Verarbeitung von Druckdaten gemäß den AFP,- und IPDS Spezifikationen,
Figur 3 Die bekannte Verfahrensweise zur Verarbeitung von Druckdaten gemäß dem sog. Formatter-Prinzip,
Figur 4 Das Prinzip der erfindungsgemäßen Verfahrensweise,
Figur 5 Die Anwendung der Erfindung auf ein Dokumentenverarbeitungssystem, bei den ein SAP-Datenbanksystem mit einem Druckproduktionssystem zusammenwirkt,
Figur 6 Das Prinzip einer erfindungsgemäßen Verarbeitung mit jeweils beteiligten Bearbeitungsmodulen,
Figur 7 Ein erfindungsgemäßen Arbeitsablauf zur Designzeit aus Sicht eines Benutzers,
Figur 8 Einen Arbeitsablauf zur Design-Phase bezogen auf Dokumentendaten,
Figur 9 Einen Arbeitsablauf in der Produktionsphase bezogen auf Dokumentendaten
Figur 10 Die Zusammenstellung eines komplexen Dokuments mit Komponenten,
Figur 11 Die Erstellung eines Dokuments mit Barcode aus variablen und statischen Daten,
Figur 12 Einen Verfahrensablauf, bei dem ausgangsseitig PCL Dokumentendaten erzeugt werden,
Figur 13 Verschiedene Stationen, bei denen Dokumentendaten zunehmend zu einem Dokument verbunden werden und
Figur 14 Erweiterungen der in Figur 13 dargestellten Stationen und
Figur 15 Einen verallgemeinerten Verfahrensablauf der Erfindung.

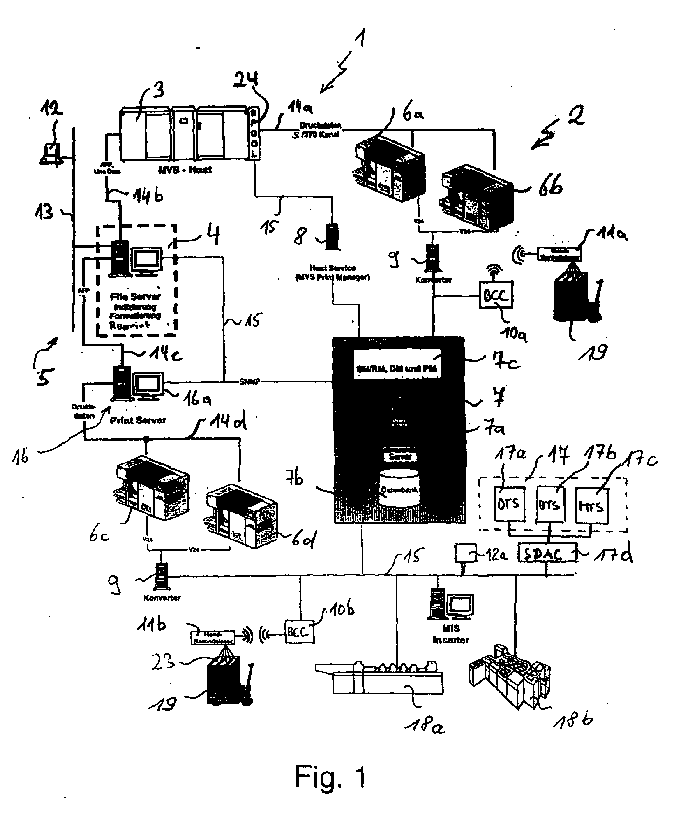

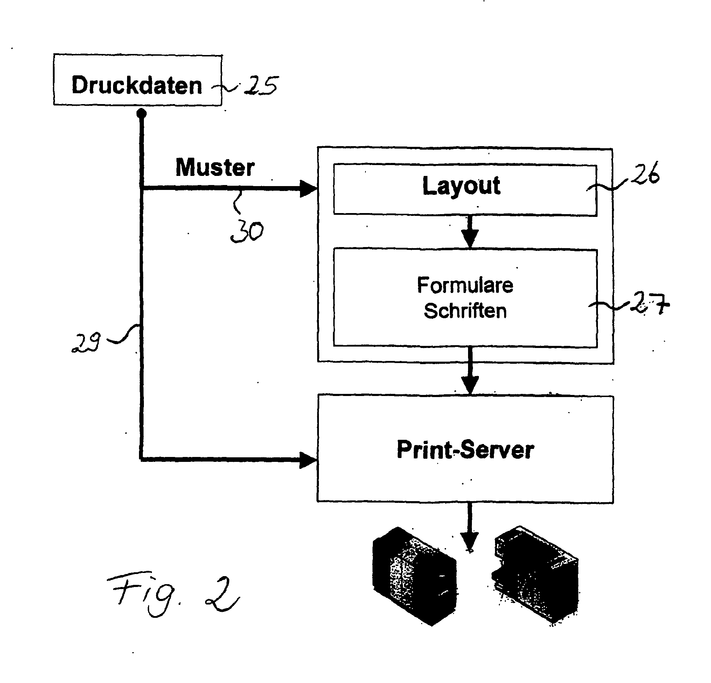

In Figur 1 ist ein Dokumenten-Druckproduktionssystem 1 gezeigt, das zum einen eine Main-Frame-Architektur 2 umfasst und zum anderen eine Netzwerk-Architektur 5, in denen jeweils Dokumentendaten bzw. Dokumentendruckdatenströme mittels Anwenderprogrammen (Tools) erzeugt werden. In der Main-Frame-Architektur 2 werden diese Druckdaten von einem Host-Computer 3, z.B. als AFP-Druckdatenstrom oder als Zeilendruckdatenstrom, erzeugt. Vom Host-Computer 3 können die Druckdaten wahlweise über einen sog. S/370-Kanal 14a direkt an einen oder mehrere Druckgeräte 6a, 6b übertragen werden. Alternativ zu diesem Ausgabekanal können die Druckdaten auch vom Host-Computer 3 über ein Netzwerk 13 oder eine direkte Datenverbindung 14b zu einem Bearbeitungscomputer 4 übertragen werden, in dem die Druckdaten zwischengespeichert (z.B. in einem zugehörigen File-Server) und für nachfolgende Ausgabeschritte bearbeitet werden. In derartigen Host-Computern 3 werden insbesondere Druckdatenströme erzeugt, die aus größeren Datenbeständen (Datenbanken) regelmäßig Listen-Ausdrucke, Rechnungen, Verbrauchsübersichten (für Telefonrechnungen, Gasrechnungen, Bankkonten) etc. zusammenstellen. Derartige Anwendungen sind häufig bereits seit vielen Jahren im Einsatz und werden nach wie vor in mehr oder weniger unveränderter Weise benötigt (sog. Legacy-Anwendungen).

Innerhalb der Main-Frame-Architektur 2 wird der Druckproduktionsablauf von einem Überwachungssystem 7 überwacht. Es umfasst einen Überwachungscomputer 7a, der mit einer Datenbank 7b gekoppelt ist und verschiedene Computerprogrammmodule 7c enthält.

Das Überwachungssystem 7 ist über ein Gerätesteuerungsnetzwerk 15 und ein Printmanager-Modul 8 mit dem Host-Computer 3 verbunden sowie über einen Konverter 9 mit z.B. einer V24-Datenleitung, die an die beiden Druckgeräte 6a, 6b ankoppelt. Der Konverter 9 setzt die V24-Signale in DMI-Protokollsignale des Gerätesteuerungsnetzwerkes 15 um. SNMP-Protokollsignale können dem Device Manager DM als DMI-Protokollsignale umgesetzt bereitgestellt werden bzw. direkt als SNMP-Protokollsignale übergeben werden.

Druckgut 19, das in den Druckern 6a, 6b aus dem Dokumenten-Druckdatenstrom erzeugt wurde und auf dem Barcodes aufgedruckt sind, kann jeweils mit einem manuell bewegbaren, funkgesteuerten Barcode-Leser 11a abgescannt werden. Die Signale werden per Funk an die Lesestation 10a übertragen und in das Gerätesteuerungsnetzwerk 15 bzw. an das Überwachungssystem 7 übermittelt. Als Barcode-Leser können Leser für ein-dimensionale und/oder zwei-dimensionale Barcodes eingesetzt werden, sodass verschiedene Barcode-Systeme mit ein und derselben Lesevorrichtung gelesen werden können. Das Barcode-Lesesystem ist insbesondere konfigurierbar, d.h., auf verschiedene, anwendungsspezifische Codes bzw. die jeweils geeigneten Kontrollverfahren anwendbar.

In der Netzwerk-Architektur 5 werden Dokumentendaten mittels Anwenderprogrammen in Client-Computern 12, 12a erzeugt, die über ein Client-Netzwerk 13 untereinander sowie mit dem Bearbeitungscomputer (File-Server) 4 verbunden sind. Der File-Server dient damit als zentrale Verarbeitungs- und Bearbeitungsschnittstelle für Druckdaten des gesamten Druckproduktionssystems 1. Auf ihm laufen diverse Steuerungsmodule (Softwareprogramme), durch die der gesamte Druckproduktionsablauf bzw. die gesamte Dokumentenbearbeitung anwendungsspezifisch, produktionstechnisch und gerätesteuerungsseitig an die jeweiligen Gegebenheiten optimal angepasst wird.

Im File-Server werden insbesondere folgende Funktionen ausgeführt, die im Zusammenhang mit den nachfolgenden Figuren genauer beschrieben werden:

### 1. Converting Indexing Sorting

Bei dieser Funktion werden eingehende Druckdaten auf ein einheitliches Datenformat konvertiert, nach vorgegebenen Parametern indiziert und in eine vorgegebene Sortierreihenfolge umsortiert. Dies ermöglicht insbesondere die für die nachfolgende Dokumentenausgabe optimierte Umsortierung des Datenstroms, beispielsweise das Zusammenfügen verschiedener Seiten, die im Eingangsdatenstrom nicht aufeinander folgen, derart zu einem Mail-Piece zusammen zu sortieren, dass sie beispielsweise in einem Kuvertiergerät 18b gemeinsam zu einer Briefsendung einkuvertiert werden können.

### 2. Einfügen von Steuerungsinformationen

Bei dieser Funktion werden in den Datenstrom Steuerungsinformationen, insbesondere Barcodes eingefügt, anhand derer eine zusammengehörige Datengruppe (z.B. Seite, Blatt, Dokument, Mail-Piece) als solche erkennbar und im Produktionsprozess an den verschiedenen Verarbeitungsstationen eindeutig lokalisierbar ist. Das Einfügen kann mit einem Verfahren bzw. einem Computersystem und einer Software erfolgen, die in der deutschen Patentanmeldung Nr. 102 45 530.9 beschrieben sind.

### 3. Datenreduktion

Mit dieser Funktion lassen sich Steuerungsdaten, die im Eingangsdatenstrom vom Host-Computer 3 bzw. Anwender-Computer 12 an den Bearbeitungscomputer 4 geliefert worden sind, dahingehend filtern, dass solche Steuerungsdaten, die bei der gegebenen Gesamtsystemanordnung nicht benötigt werden, entfernt werden. Durch die Verbindung aller beteiligten Ausgabegeräte (Drucker 6a bis 6d, Schneidegerät (Cutter) 18a, Kuvertiergerät 18b) über das Gerätesteuerungsnetzwerk 15, kann bereits im Bearbeitungscomputer 4 entschieden werden, welche Steuerungsdaten des Eingangsdatenstroms von keinem der angeschlossenen Geräte benötigt wird. Durch Entfernen dieser Daten aus dem Datenstrom kann der Datenstrom insgesamt reduziert werden, insbesondere dann, wenn lediglich leere Feldeinträge zu entsprechenden Steuerungsdaten im Eingangsdatenstrom enthalten sind.

### 4. Extraktion

Mit dieser Funktion lassen sich aus dem Ausgangsdatenstrom vorgegebene Daten filtern bzw. aussondern, wodurch ein komprimierter Datenstrom (verdichtete Daten), insbesondere für Steuerungs- und Statusdaten, entsteht, der mit sehr hoher Geschwindigkeit zwischen den beteiligten Geräten und dem Überwachungscomputer austauschbar ist. Hierdurch ist es möglich, die Überwachung der beteiligten Geräte in Echtzeit (Realtime) auszuführen.

Die Funktionen 1. - 4. sind von einem Computerprogramm-Modul "CIS" (Converting, Indexing and Sorting) weitgehend automatisiert durchführbar, auf das später nochmals genauer eingegangen wird.

### 5. Wiederholungsdruck (Reprint)

Wenn im Zuge der Weiterverarbeitung der Daten, insbesondere bei der Ausgabe der Daten auf einem der Druckgeräte 6a, 6b, 6c oder 6d, in einem der Nachverarbeitungsgeräte 18a, 18b oder auch im Druckcomputer 16, ein Fehler auftritt, so kann dies durch das Überwachungssystem 7 anhand der im Bearbeitungscomputer 4 eingefügten Steuerungs-Barcodes festgestellt werden und der Nachdruck der von der Störung betroffenen Dokumente (Seiten, Blätter, MailPieces) angefordert werden. Diese Wiederholungsdruck-Anforderung wird maßgeblich im Bearbeitungscomputer 4 gesteuert.

Druckdaten, die vom Bearbeitungscomputer 4 fertiggestellt wurden, werden über die Druckdatenleitung 14c an einen Druckserver 16 geleitet. Dessen Aufgabe ist es im wesentlichen, den Bearbeitungscomputer 4 zu entlasten. Dies erfolgt durch Zwischenspeicherung der fertiggestellten Druckdaten bis zu deren Abruf über die Datenleitung 14d an einen oder beide Drucker 6c, 6d. Der Druckserver 16 ist somit in erster Linie aus Gründen der Performance (Geschwindigkeits) im Gesamtsystem integriert. Bei Systemen, deren Druckgeschwindigkeit weniger groß ist, kann auf den Druckserver 16 auch verzichtet werden.

Dokumentendaten, die an die Drucker 6c bzw. 6b übermittelt und dort auf einen Aufzeichnungsträger (z.B. Papier) gedruckt werden, werden im Gesamtsystem weiteren Bearbeitungsstufen, nämlich dem Schneidegerät 18a und dem Kuvertierungsgerät 18b der weiteren Verarbeitung zugeführt. Damit ist der Druckproduktionsprozess abgeschlossen.

Die gedruckten Dokumente werden auf ihrem Verarbeitungsweg zwischen dem Druckgerät 6 und dem letzten Nachverarbeitungsgerät 18b hinsichtlich verschiedener Kriterien mit einem Testsystem 17 getestet, nämlich durch ein optisches Testsystem 17a hinsichtlich ihrer optischen Druckqualität, mit einem Barcode-Testsystem 17b hinsichtlich ihres Vorhandenseins, ihrer Konsistenz und/oder ihrer Reihenfolge sowie mit einem MICR-Testsystem 17c, sofern der Druck mittels magnetisch lesbarem Toner (Magnetic Ink Character Recognition Toner) gedruckt wurde. Die vom Testsystem 17 gelieferten Daten der verschiedenen Testsysteme werden von einem gemeinsamen seriellen Datenerfassungsmodul (Serial Data Aquisition Modul) 17d an das Gerätesteuerungsnetzwerk 15 übermittelt und dem Überwachungssystem 7 zugeführt.

Dort werden die jeweiligen Systemdaten erfasst und in Echtzeit die Geräte überprüft sowie die jeweiligen Positionen der Dokumente hinsichtlich ihrer Korrektheit bezüglich des Druckauftrages getestet.

Weitere Details eines derartigen Testsystems 17 sind im US-Patent Nr. 6,137,967 bzw. in dazu korrespondierenden Patentanmeldungen beschrieben. Der Inhalt dieses Patents bzw. dieser Patentanmeldungen wird hiermit durch Bezugnahme in die vorliegende Beschreibung aufgenommen.

Die fertig gedruckten Dokumente 23 können wiederum mit einem Barcode-Leser 11b erfasst werden, der z.B. funkgesteuert mit einer zugehörigen Steuerungseinrichtung 10b verbunden ist, welche wiederum über das Gerätesteuerungsnetz 15 ihre Daten an das Überwachungssystem 7 liefert.

Aus der PCT/EP02/05296 ist ein System bekannt, mit dem Dokumente, die auf einem Drucksystem ausgedruckt werden, auf einem Bildschirm exakt in derselben Weise dargestellt werden wie auf dem Drucksytem, indem ein-und derselbe Rasterprozess sowohl zum Anzeigen als auch zum Drucken verwendet wird.

Der Inhalt der oben angegebenen Patente, Patentanmeldungen und Veröffentlichungen wird hiermit durch Bezugnahme in die vorliegende Beschreibung aufgenommen.

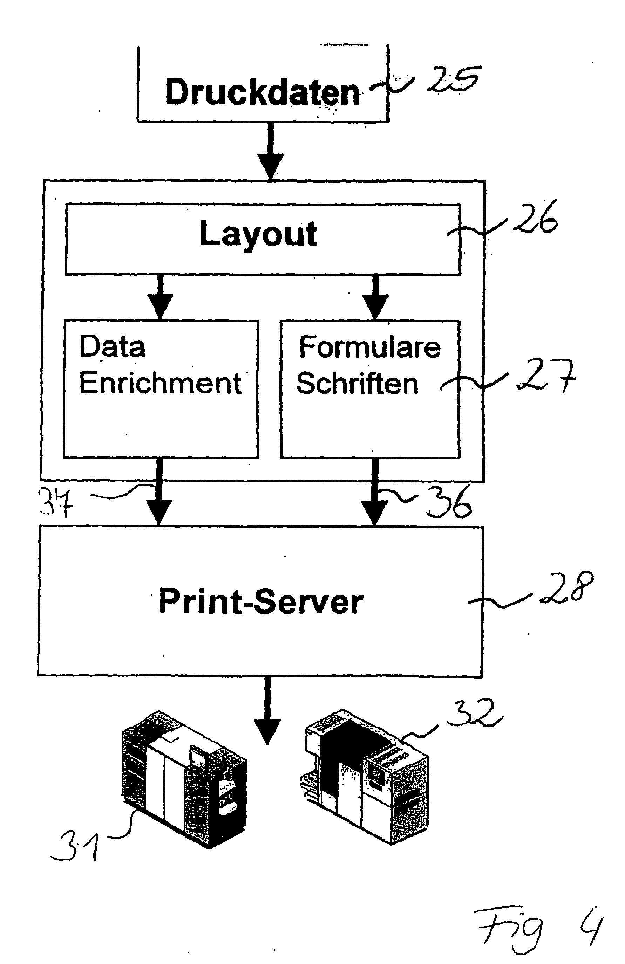

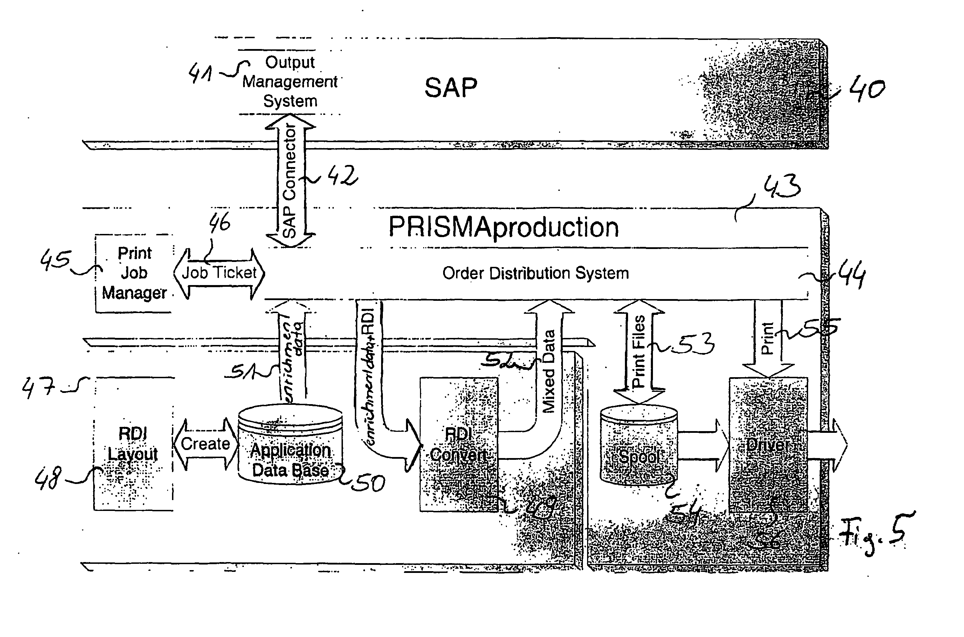

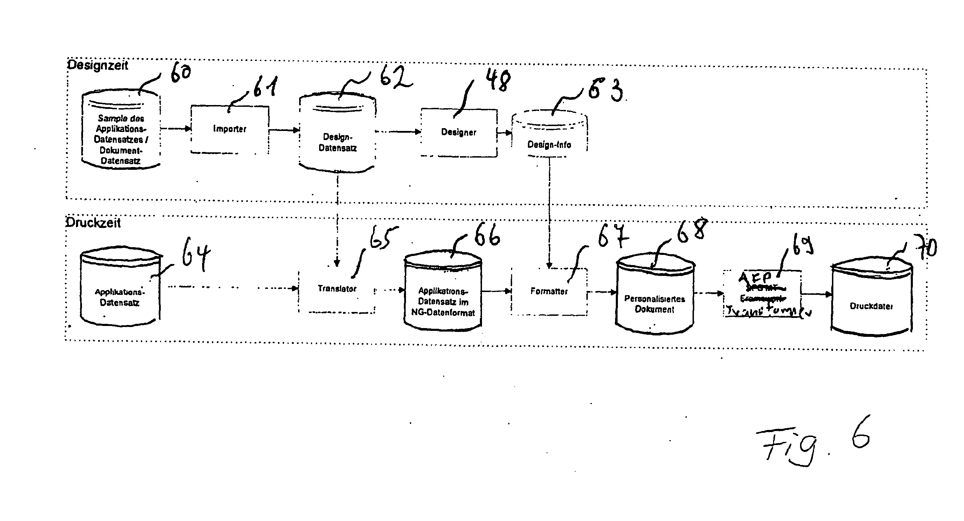

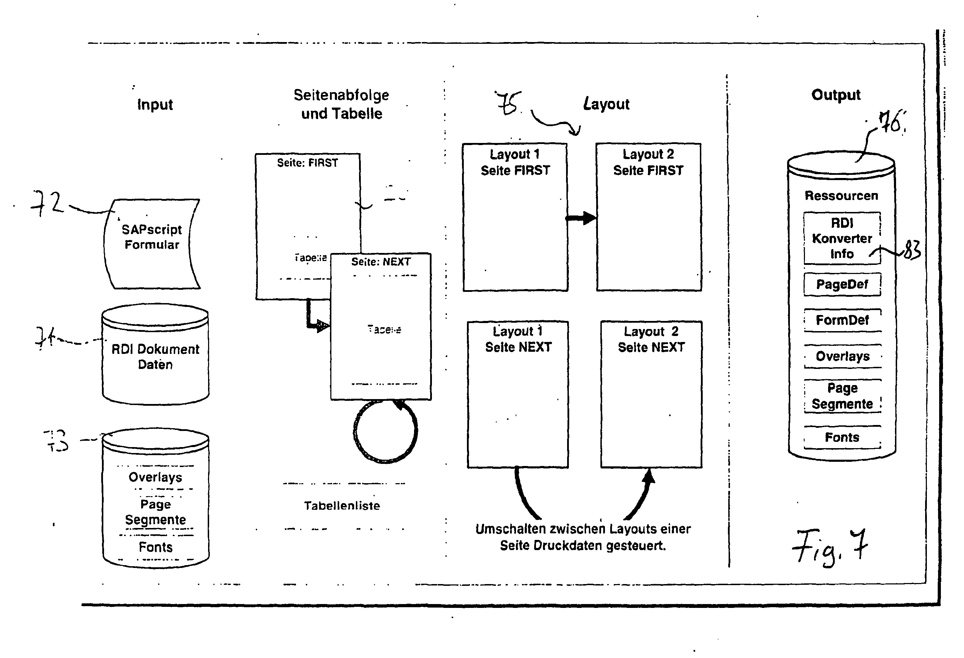

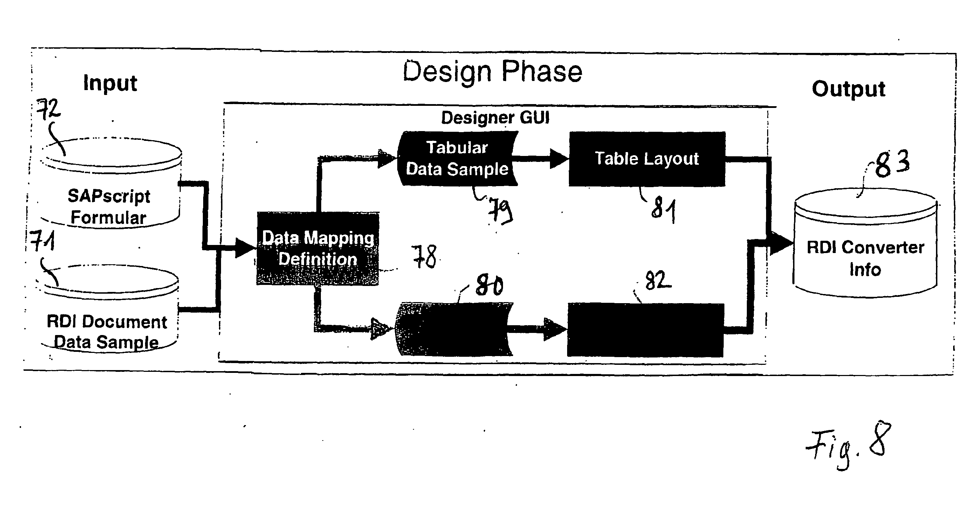

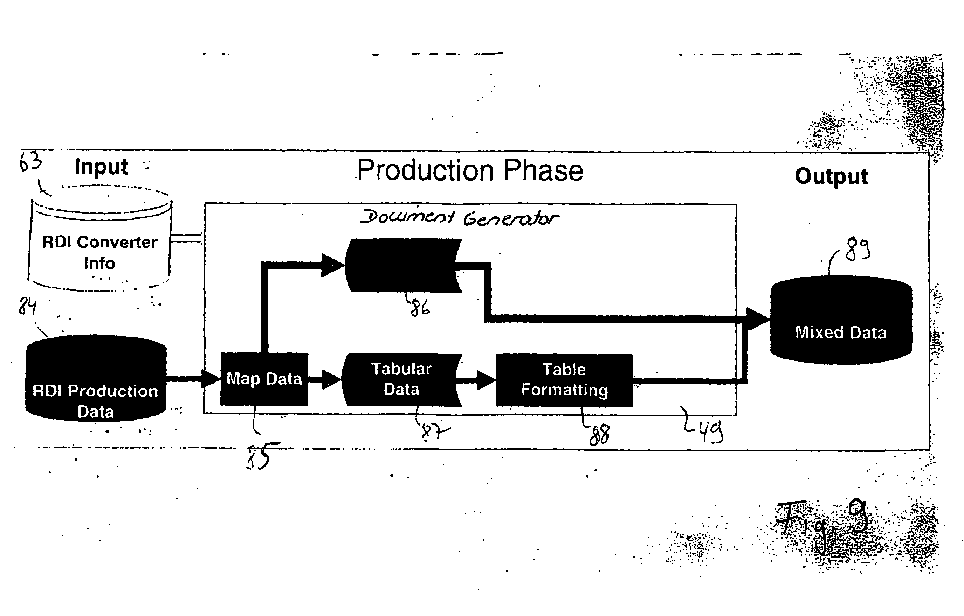

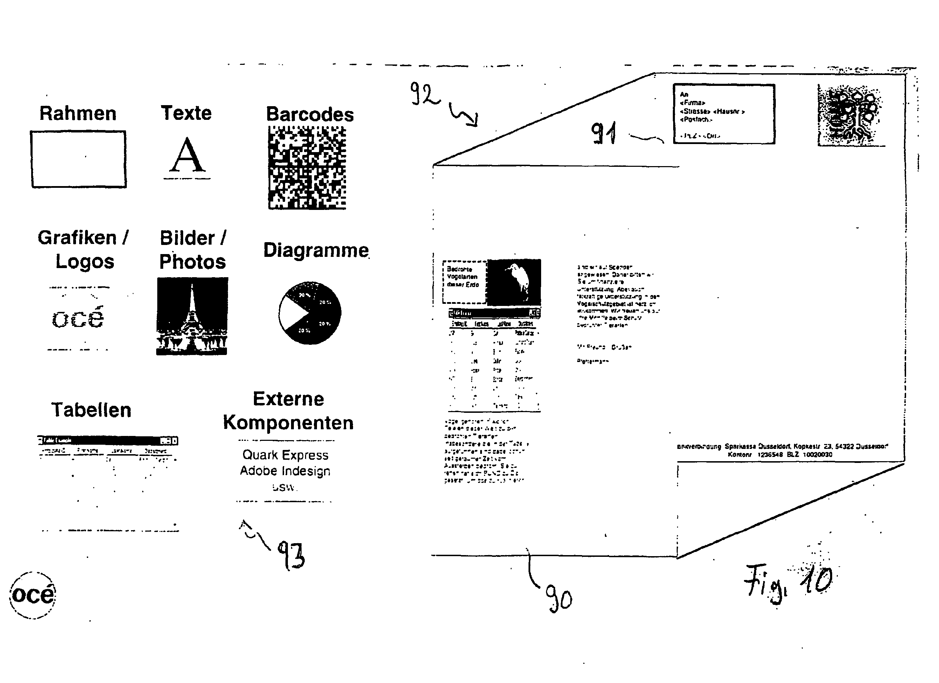

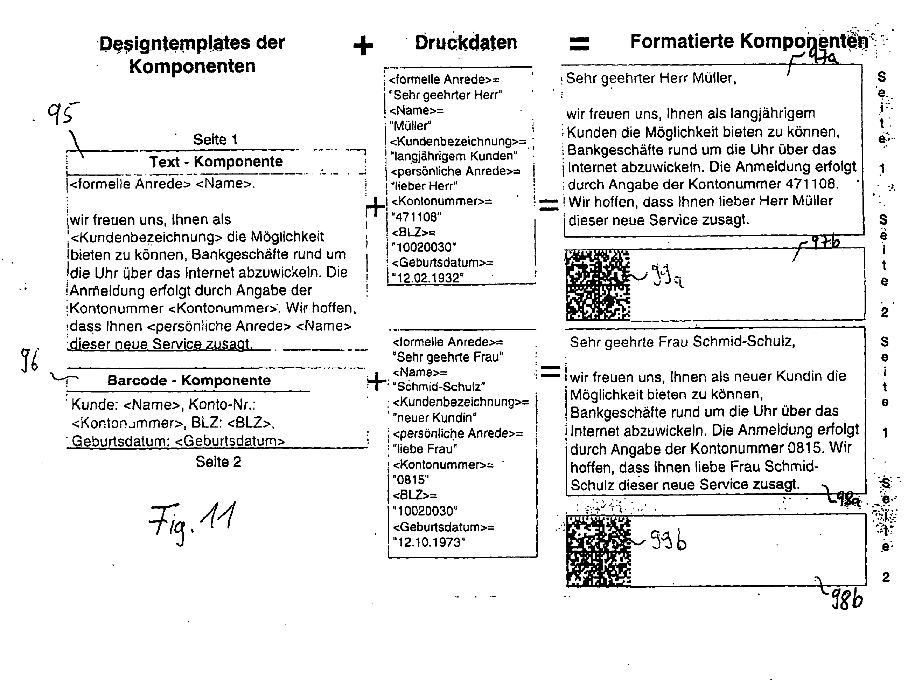

In Figur 4 ist eine erfindungsgemäße Vorgehensweise veranschaulicht. Mit Hilfe des Layout-Editors werden statische Ressourcen anhand eines vollständigen Druckdatenmusters erstellt. Dies sind die im AFP-Datenstrom bekannten Standard-ressourcen, wie Overlays, Pagesegmente, Fonts, Pagedef- und Formdef-Dateien. Druckdaten, die jedoch mittels der standardmäßig im AFP-Funktionsspektrum angebotenen Formatierungen nicht enthalten sind, werden jedoch nicht in eine AFP-Ressourcen-Datei geschrieben sondern in eine erweiterte, alle variablen Druckdaten enthaltende Druckdaten-Datei. Diese Datei wird zur individuellen Gestaltung mit besonderen Formatierungs-Elementen, z. B. grafischen Elementen wie Kuchendiagrammen oder Balkendiagrammen herangezogen. Dazu ist der Editor 26 derart erweitert, daß solche Formatierungen durchgeführt werden können. Das Grundkonzept der AFP-Datenstruktur, nämlich die Datentrennung zwischen variablen und statischen Daten wird dabei dennoch weitgehend beibehalten. Vom Formatter-Prinzip wird beibehalten, daß die Druckdaten vollständig an eine Zwischenstufe übertragen werden. In dieser Zwischenstufe werden - wie bei der Verarbeitung von AFP-Druckdaten vorgesehen - den Druckdaten Ressourcen zugeordnet und somit Formulare, Schriften etc. vereinheitlicht und in einen relativ kleinen AFP-Ressourcen-Datenstrom umgesetzt. Dieser Ressourcen-Datenstrom wird über einen AFP-Kanal 36 übertragen.

Weiterhin werden aus den variablen Druckdaten diejenigen Daten herausgesucht, die bereits anderweitig formatiert sind oder bei denen keine performante Umwandlung bzw. Zuordnung von AFP-Ressourcen möglich ist. Diese Druckdaten werden dementsprechend um die benötigten Befehle erweitert (Data Enrichment). Diese Druckdatenerweiterung findet in einer sogenannten Design-Phase mittels eines geeigneten Editors statt, in dem entsprechende Musterdatensätze untersucht werden und entsprechende Zuordnungen getroffen werden. Beispielsweise könnte eine Datentabelle herangezogen werden und der Befehl zugeordnet werden, daß aus den in der Datentabelle stehenden Zahlen ein Kuchendiagramm als grafisches Element zu erzeugen ist. Als Editor kann wahlweise ein geeignetes neues Computerprogramm zur Verfügung gestellt werden oder ein bereits bestehender Editor für eine bestimmte Drucksprache, beispielsweise ein AFP-Editor, wie der oben erwähnte Smart Layout Editor (SLE) der Anmelderin, um entsprechende Funktionen erweitert werden.

In einer produktiven Phase, das heißt während der variable Druckdatenstrom von der Datenquelle 25 an den Druckserver oder direkt an eines der Druckgeräte 31, 32 übertragen wird, wird der entsprechend erweiterte Druckdatenstrom über den Datenkanal 37 an den Druckserver bzw. Drucker gesandt. Im Druckserver 28 bzw. Druckgerät 31, 32 wird der aufbereitete Druckdatenstrom mit den einmalig übertragenen AFP-Ressourcen kombiniert und schließlich der so kombinerte Datenstrom an den Drucker als IPDS-Datenstrom gesandt.Ein Ausdruck kann auch als Telefax an ein Faxgerät erfolgen, die Daten über einen email-Computer, beispielsweise über den Client-Computer 12, als email versandt werden oder über einen www-Server in das Internet gestellt werden.

Mit der Erfindung ist es somit einerseits möglich, Standard-Daten performant zu übertragen, weil diese Daten nicht durch Formatierungsanweisungen überladen sind und andererseits diejenigen Datenformate, welche nicht oder nur umständlich in AFP beschreibbar sind, einfach und schnell an den Druckserver zu übertragen.

Bei der erfindungsgemäßen Verfahrensweise ist damit vorgesehen, die aus AFP-Umgebungen bekannte Verarbeitungsweise um mindestens eine Funktionalität zu erweitern, durch die innerhalb der Druckdaten Formatierungsanweisungen, wie die Darstellung grafischer Daten, z.B. der Umwandlung in Kuchen- bzw. Balkendiagramme oder der Hinzufügung von Komponenten, wie Barcodes, Bilder und anderer Objekte übertragen werden können.

Ein Vorteil der erfindungsgemäßen Lösung ist dabei einerseits die Arbeitskompatibilität zu den bekannten Umfeldern und zum andern die Möglichkeit, bestehende, immer wiederkehrende Druckaufträge weiterhin verwenden zu können. Somit kann eine 100%-ige Abwärtskompatibilität des Verfahrens in Druckproduktionsumgebungen gewährleistet werden. Druckdatenströme, die unter früheren Editoren erzeugt wurden, wie z. B. Zeilendatenströme (Line Data Streams) können weiterhin direkt über ein erfindungsgemäß erweitertes Layout bzw. Editormodul an den Printserver bzw. Drucker übertragen werden. Dazu wird lediglich eine früher erzeugte pagedef-Datei in ein Dokument-Template übernommen.

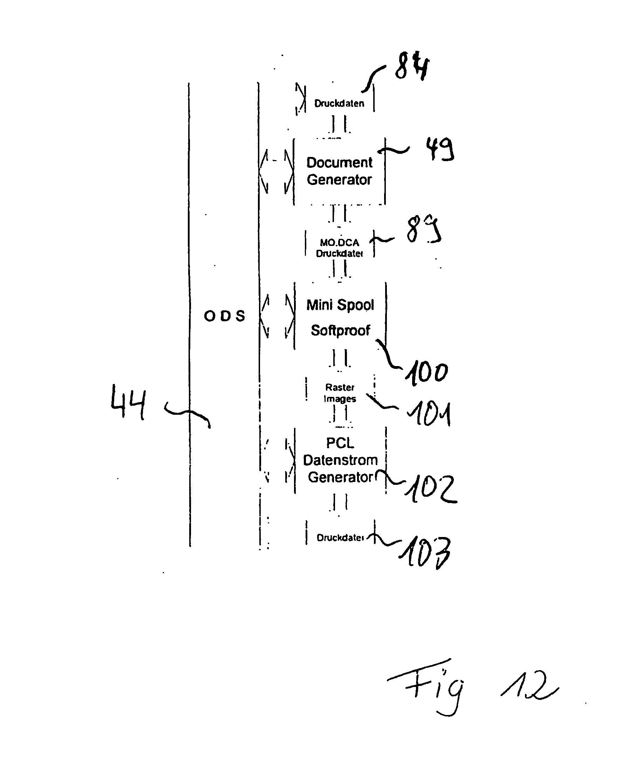

In Figur 5 ist gezeigt, wie erfindungsgemäße Computerprogrammprodukte so zusammenwirken, daß Daten, die aus einer SAP-Datenbankanwendung stammen, mit Formatierungsinformationen aufbereitet und in einem Druckproduktionssystem so aufbereitet werden, daß sie an ein Druckgerät gesandt werden können. Von der SAP-Datenbankanwendung 40 werden Druckdaten über ein Ausgabedaten-Managementsystem 41 (Output Management System) und eine SAP-Schnittstelle 42 (SAP Connector) an ein Druckproduktionssystem 43 gesandt. Dort werden Druckaufträge von einem Auftragsverteilungssystem 44 (Order Distribution System) für die weitere Verarbeitung verwaltet. Jeder Druckauftrag wird dabei mittels eines Druckauftragsmanagers 45 (Printjob Manager) individuell gekennzeichnet und mit Druckauftragsdaten, beispielsweise für einen gewünschten Ausgabedrucker oder einer gewissen Priorität, versehen. Diese Daten stehen in einer Druckauftrags-Begleitdatei 46 (Jobticket). Zur Aufbereitung von Druckdaten aus einer Anwenderdatenbank dient ein Datenerweiterungs-Modul 47. Dieses umfaßt zwei Computerprogramm-Module 48, 49, die zu verschiedenen Zeitpunkten benötigt werden.

In einer Datenvorbereitungsphase werden die Daten eines Musterdatensatzes aus einer Anwendungsdatenbank 50 (z.B. SAP Datenbank) herangezogen und mittels des Designer-Moduls 48 geeignete Formatierungs- und sonstige Ergänzungsdaten an den Musterdatensatz angehängt, um diesen nach Wunsch eines Anwenders aufzubereiten. Geeignete Erweiterungsdaten 51 werden dann über das Auftagsverteilungssystem 44 an das Dokumenten-Generator-Computerprogramm 49 übermittelt. Mit dem Dokumenten-Generator-Computerprogramm 49 werden zudem die RDI-Daten sowie die zugehörigen Formatierungsdaten in ein internes vorgegebenes, an ein Drucksystem gekoppeltes oder von einem Anwender ausgewähltes Druckdatenformat umgewandelt. Die Umwandlung kann dabei z. B. in einen AFP-Datenstrom, einen PCL-Datenstrom, einen PostScript-Datenstrom oder auch einen PDF-Datenstrom erfolgen.

Das Computerprogramm-Modul 49 verwendet die Erweiterungsdaten in einer zweiten Verarbeitungsphase, in der die vollständigen Datenbankdaten von der SAP-Datenbankanwendung 40 über die SAP-Schnittstelle 42 übermittelt werden, Datensatz für Datensatz mit den Erweiterungdaten anzureichern. Auf diese Weise entstehen personalisierte Dokumente 52, die über das Auftragsverarbeitungssystem 44 als Druckdateien 53 an ein Sammelprogramm 54 (Spool) oder als direkte Druckdaten über ein Druckertreiber-Modul 56 an einen Drucker (in Figur 5 nicht gezeigt) ausgegeben werden.

In Figur 6 sind die Datenverarbeitungsvorgänge dargestellt, die einerseits in der Vorbereitungsphase (Design-Phase) und andererseits in der produktiven Phase (Druckphase) durchgeführt werden um Druckdaten aus beliebigen Quellen aufbereiten zu können. Ein Probedatensatz bzw. ein Probedokument 60 wird zur Design-Phase über ein Import-Modul 61 als Design-Datensatz 62 in das Designer-Computerprogramm 48 geladen. Anhand dieses Programms 48 werden beliebige Formatierungs- bzw. Ergänzungs- informationen zu dem Design-Datensatz 62 hinzugefügt und somit die Design-informationsdatei 63 gebildet. Zur Druckphase werden Applikations-Datensätze 64 Datensatz für Datensatz eingelesen und mittels eines Übersetzungs-Computerprogramm-Moduls 65 des Dokumenten-Generator-Computerprogramms 49 in ein internes AFP-Datenformat 66 übersetzt. Der Translator 65 bildet aus dem Applikations-Datensatz 64 den Applikations-Datensatz im internen Datenformat 66 auf das dann ein Computerprogramm-Modul "Formatter" des Dokumenten-Generator-Computerprogramms 49 angewandt wird.

Das Formatter-Computerprogramm-Modul 67 erzeugt aus den Druckdaten im internen Datenformat und den durch den Design-Prozeß definierten Formatierungsvorschriften, die in der Design-Informationsdatei 63 hinterlegt sind, das personali-sierte Dokument 68. Ein Datentransformations-Modul 69 (AFP-Transformer) wandelt die personalisierte Dokumentendatei 68 in eine Druckdatei 70 um.

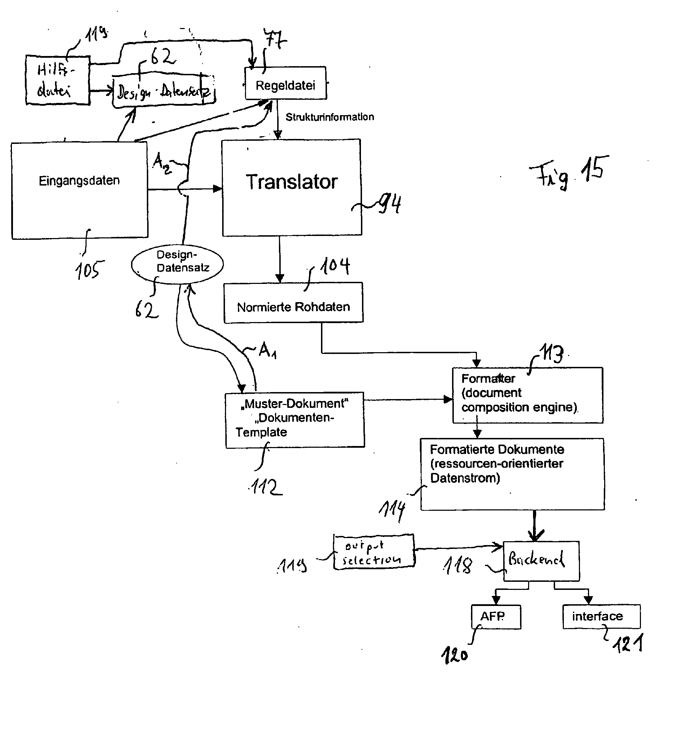

In Figur 7 ist gezeigt, welche Funktionen mit dem Designer-Computerprogramm 48 (vgl. Figur 5) ausgeführt werden können. Als Eingangsdatensignale werden SAP-RDI-Dokument-daten 71 sowie das bei ihrer Generierung benutzte SAP-RDI-Formular 72 akzeptiert. Weiterhin werden Overlays, Pagesegmente und Fontdaten 73 aus AFP-Umgebungen akzeptiert. Mit dem Designer-Computerprogramm 48 können während der Vorbereitungsphase aus Tabellenlisten Seitenabfragen sowie Tabellenpositionen 74 definiert werden. Weiterhin können Layout-Zuordnungen 75 festgelegt werden und vorgesehen werden, daß zwischen Layouts einer Seite druckdatengesteuert umgeschaltet wird. Ausgangsseitig werden dann Ressourcen 76 bereitgestellt, in denen Informationen über die Art der RDI-Konvertierung 83 enthalten sind, die AFP-Ressourcen-Dateien Pagedef, Formdef und Overlay sowie die Pagesegmente und die Fonts, welche eingangsseitig bereitgestellt wurden. Die RDI-Konvertierungsinformationen 83 enthaloten den Design-Datensatz 62, die Informationen der Regeldatei 77 und das Dokument-Template 112 (siehe Fig. 15).

In Figuren 8 und 9 sind nochmals die beiden Vorbereitungsphasen (Design-Phase) und Produktionsphase (Productionphase) mit ihrem jeweiligen Arbeitsablauf dargestellt. Eingangsseitig werden in der Design-Phase (Figur 8) die beiden Dateien RDI-Dokument-Daten 71 und SAP Script-Formular 72 eingelesen und in einem Datenselektiervorgang 78 musterweise die Daten getrennt in typische Muster-Tabellendaten 79 und in Muster-Zeilendaten 80, die keiner Tabelle zugeordnet werden. Die Zeilendaten 80 werden dann einem typischen Zeilendatenprozess unterzogen, das heißt wie Zeilendaten formatiert, wobei ein Zeilendatenlayout 82 erzeugt wird, z. B. eine bestimmte grafische Wiedergabe wie ein Kuchendiagramm, festgelegt wird. Aus den typischen Tabellendaten 79 wird ein Tabellen-Layout 81 abgeleitet, wobei sie mit zusätzlichen Formatierungs-Anweisungen für die Seitenformatierung angereichert werden können. Sowohl Tabellen-Layout als auch Seiten-Layout können gemeinsam oder bereichsweise Fonts zugeordnet bekommen. Aus diesen Informationen wird die Design-Informations-Datei 83 als Ausgabedatei erstellt. Sie enthält einen Design-Datensatz 62 und die Design-Information 63 (siehe Figur 6), welche zum Normieren des Datenstroms und zum Formatieren des normierten Datenstroms benötigt werden. In der Produktionsphase (Figur 9) wird die Design-Informations-Datei 83 gemeinsam mit den RDI-Produktions-Daten 84 eingelesen. In einem Datentrennvorgang 85 werden die Zeilendaten 86 von den Tabellen-Daten 87 getrennt, die Tabellen-Daten 87 von einem Tabellenformatier-Modul 88 formatiert und vom Dokumenten-Generator-Computerprogramm 49 die Daten als AFP-Daten-Datei 89 (Mixed Data) ausgegeben.

Figur 10 zeigt ein Dokument 92, das aus zwei Bestandteilen, nämlich einer statischen Rahmenseite 91 und einer dynamischen Seite 90 mit veränderlicher Länge der darin enthaltenen Information zusammengesetzt ist. In beiden Seiten können verschiedenartige Komponenten 93 vorgesehen sein, wie z. B. Rahmen, Texte, Barcodes, Grafiken und Logos, Bilder und Fotos, Diagramme, Tabellen und externe Komponenten, die durch externe Programm-Module, wie die Programme Quark XPress^{™} und Adobe Indesign^{™} erzeugt werden und insbesondere dynamische, das heißt variable Länge, aufweisen. Mit der Erfindung können derartige Dokumente sehr flexibel und dynamisch, das heißt mit variabler Länge erzeugt werden. Dies wirkt sich vor allem bei Tabellen, Diagrammen, wie Kuchendiagrammen oder Balkendiagrammen sowie von Elementen externer Komponenten positiv aus. Am Beispiel, das in Figur 11 gezeigt ist, wird dies deutlich. Dort ist jeweils gezeigt, wie eine Text-Komponente 95 mit einer Barcode-Komponente 96 und verschiedenen Druckdaten zusammenwirkt. Konstante und variable Daten werden daher jeweils in unterschiedlicher Art und Weise weiterverarbeitet. Die statischen Teile der Textkomponente 95, das heißt diejenigen, die nicht in eckigen Klammern markiert sind, werden dabei in den jeweils ersten Seiten 97a, 98a der beiden Dokumente im Klartext wiedergegeben, während die in eckigen Klammern stehenden dynamischen Textanteile durch die Druckdaten ersetzt werden. Bei der Barcode-Komponente hingegen werden sowohl die statischen Textanteile als auch die dynamischen Textanteile verwendet um einen zweidimensionalen Barcode auf den Seiten 2 des ersten Dokuments 97b und des zweiten Dokuments 98b zu erzeugen. Aufgrund der Einteilung der Dokumentenbestandteile in verschiedene Komponenten kann daher im produktiven Betrieb das Dokumenten-Generator-Computerprogramm 49 entscheiden, welche Daten wiederzugeben sind und für welche Daten unter Umständen Unterprogramme aufgerufen werden müssen, die die Komponenten weiterverarbeiten. Beispielsweise werden die Barcode-Komponenten-Daten an ein Barcodeerzeugungs-Modul überspielt, in dem die in den Dokumentenbereichen 97b und 98b abgebildeten Barcodes 99a, 99b als Ausgabeobjekte zurückgegeben werden.

Figur 12 zeigt, wie in der Systemumgebung von Figur 5 ein Druckdatenstrom zunächst erweitert und in einen AFP-Druckdatenstrom umgewandelt wird und zur Ausgabe nochmals umgewandelt wird in ein PCL-Format. Zentrales Steuer-Modul ist dabei das Auftragsverteilungssystem 44 (Order Distribution System). Nicht oder nur teilweise formatierte Druckdaten (z. B. RDI-Daten) werden dabei vom Dokumenten-Generator-Computerprogramm 49 aufbereitet und wie in Figur 9 beschrieben, in eine AFP-Druckdatei 89 ausgegeben. Diese AFP-Druckdaten können dann mit einem Minispool-Programm 100 mit Softproof in Rasterbilder 101 umgewandelt werden. Diese Rasterbilder werden schließlich in einen PCL-Datenstrom 102 eingebettet und als Druckdatei 103 ausgegeben. Da diese Vorgehensweise auf die AFP-Druckdatenbeschreibung aufsetzt und der Softproof so durchgeführt werden kann, daß er genau in der selben Weise rastert, wie ein IPDS-Drucker, wird eine mit AFP vergleichbare und im wesentlichen identische Druckausgabe erreicht. Ein entsprechendes Softproof-Verfahren, bei dem ein- und derselbe Rasterprozess für einen Preview und für einen Druckvorgang verwendet wird, ist z. B. in der von der Anmelderin eingereichten PCT/EP02/05296 beschrieben. Der Inhalt dieser Patentanmeldung wird hiermit ebenfalls durch Bezugnahme in die vorliegende Beschreibung aufgenommen.

Das aufgerasterte Softproof-Bild kann weiterhin entweder direkt oder indirekt über die entsprechenden normierten Daten editiert werden, so daß in einer WYSIWYG (what you see is what you get)-Darstellung das Dokument einschließlich seiner Tabellendaten auf einem Anzeigemedium, z.B. Bildschirm 16a, benutzerindividuell veränderbar ist, wobei das Dokumenten-Template geändert wird und damit eine Rückwirkung auf den normierten Ausgangsdatenstrom erfolgt.

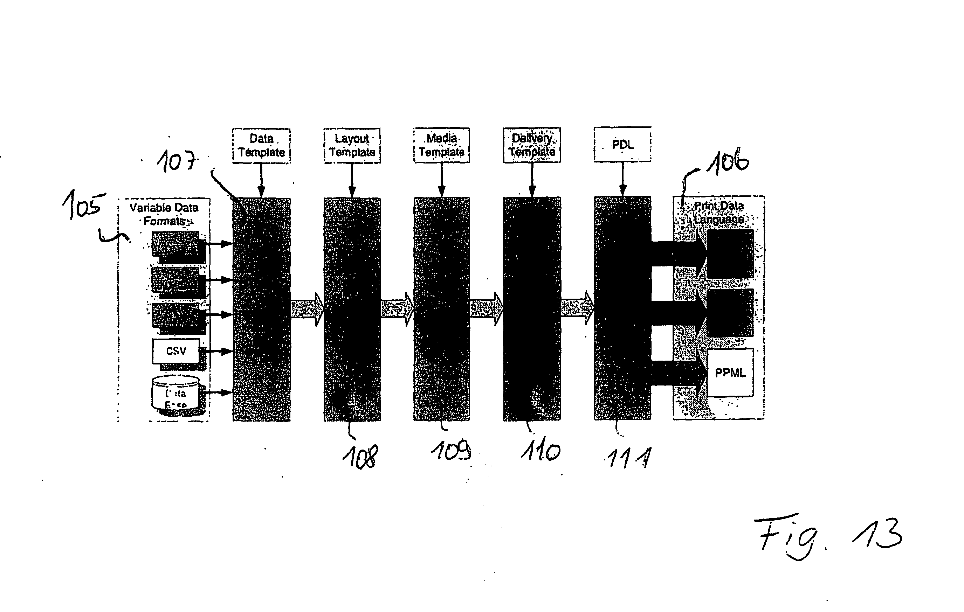

In Figur 13 ist gezeigt, wie ein Dokumenten-Eingangs-Datenstrom 105, der einem aus vielen möglichen Eingangs-Datenformaten, wie Zeilendaten, RDI-Daten, XML-Daten, CSV-Daten oder Datenbankdaten entspricht, in einen Ausgangs-Datenstrom 106 umgewandelt wird, der einem aus vielen möglichen Ausgangs-Datenformaten, wie z. B. AFP, PCL, PPML entspricht. Der Eingangs-Datenstrom 105 wird dabei in einem Schritt 107 in ein normiertes internes Datenformat umgewandelt. Die Codierung des Eingangs-Datenstroms wird in diesem Fall in eine Unicode-Codierung (mapping-Vorgang auf Unicode) umgesetzt. Dann wird dem Datenstrom eine Dokumentenforma-tierungsinformation in einem Formatierungsschritt 108 hinzugefügt. In einem letzten Schritt 111 werden die Daten in das ausgewählte Ausgangs-Datenformat umgewandelt.

Die Formatierung der Daten im Schritt 108 kann insbesondere in der zuvor dargestellten Weise erfolgen, in dem die Daten und/oder einzufügende Formatierungsinformationen anhand von Komponenten, das heißt Platzhaltern für bestimmte Informationen, eingefügt werden. In einem zusätzlichen Schritt 109 können den Daten seitenspezifische Informationen hinzugefügt werden, z. B. in welcher Art und Weise die Seiten zu Papier gebracht werden sollen (N-Up, Duplex oder dgl.).

In weiteren, dokumentenspezifischen Formatierungsschritten 109, 110 können den Druckdatenseiten- und dokumentenspezifische Informationen, wie Bildung von Signaturen oder Ausschieß-Schemata, Impositioning, Umsortierungsvorgänge, Barcodeeinfügung usw. hinzugefügt werden. Weiterhin ist es möglich, direkt vom geräteunabhängigen normierten Ausgangsdatenstrom eine Ausgabe auf einem Anzeigemedium (Bildschirm etc.) zu bewirken, wobei ein spezifisches Ansteuermodul für das Anzeigemedium bzw. für ein Anzeigemedium entfaltenden Computersystems, beispielsweise mit einer Windows API oder einer Ankopplung an einen Browser unter Windows oder Linux, vorgesehen ist. Die oben genannten Arbeitsschritte werden jeweils von sogenannten Templates gesteuert. Dabei kann vorgesehen sein, daß weitere Templates Anwendung finden, auch über eine Schnittstelle zu externen Programmen, wie Océ Professional Document Composer (PDC), Océ CIS (Converting indexing sorting), Adobe^{®} Indesign oder einem Barcode-Generierungsmodul.

Die ausgabespezifische Umwandlung 111 kann insbesondere in einer druckerspezifischen Sprache erfolgen. Weiterhin kann das interne Druckdatenformat ein AFP-Druckdatenformat sein, wodurch es lediglich nötig ist, AFP-Daten zu sammeln (Spool), wenn sie auf einem AFP-fähigen Ausgabegerät ausgegeben werden sollen. Dabei kann auch eine Konvertierung in andere Sprachen erfolgen, wie PCL oder PPML, wobei eine Einbettung in ge-rasterte Bilder erfolgen kann (siehe oben) oder eine direkte Umwandlung auf Sprachenebene.

Mit der oben gezeigten Anordnung ist es möglich, alle zwischen dem Eingangsdatenstrom und dem Ausgangsdatenstrom liegenden Verarbeitungsstufen geräteunabhängig zu gestalten. Ausgangsseitig können die Daten dann wahlweise geräteabhängig ausgegeben werden oder ebenfalls als geräteunabhängiger Datenstrom. Ein geräteabhängiger Datenstrom kann z. B. in den Formaten MO:DCA, PCL, PostScript oder PDF ausgegeben werden.

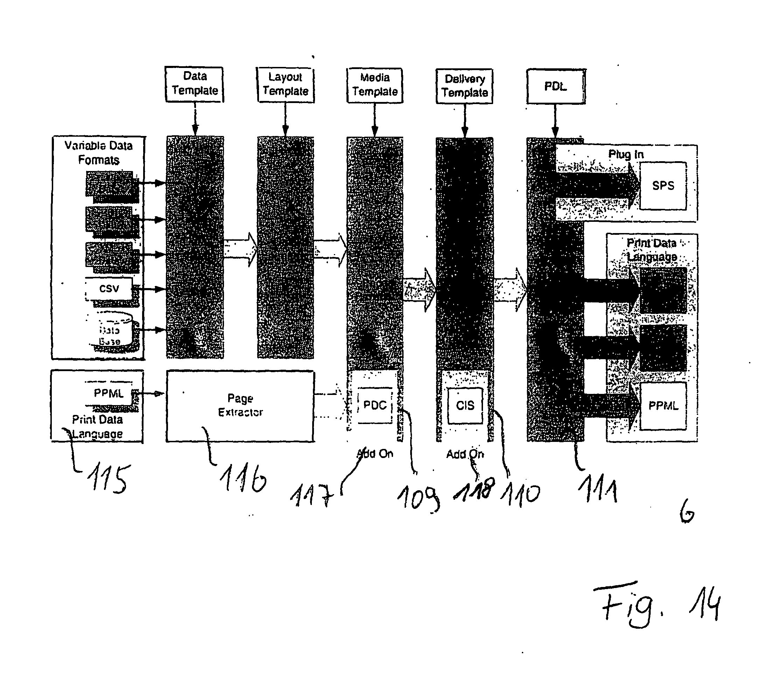

In Figur 14 ist die Figur 13 nochmals um einige Funktionselemente erweitert. Daten 115, die eingangsseitig in dem Format Personalised Printer Mark-up Language (PPML) zur Verfügung gestellt werden, können mittels eines Seitenextraktions-Moduls 116 direkt in die seitenspezifische Formatierungsprozedur 109 eingeschleust werden. Zur Aufbereitung der Seiten für einen Signaturendruck kann ein Ausschießprogramm 117 (PDC) auf das seitenspezifische Formatierungs-Modul 109 aufgesetzt werden. Zur Umsortierung und/oder Einfügung von Barcodes oder Indizierungselementen kann ein weiteres Bearbeitungs-Modul 118 auf das dokumentenspezifische Formatierungs-Modul 110 aufgesetzt werden. Auch eine Weiterleitung durch ein Post-Modul oder ein Netzwerk-Verbindungs-Modul ist möglich.

In Figur 15 ist ein erfindungsgemäßer Verfahrensablauf nochmals verallgemeinert dargestellt. Zur Umschaltung der Eingangsdaten 105 in die normierten Daten 104 dient ein übersetzungsstufenmodul 94, das von der Regeldatei 77 gesteuert wird. Die Regeldatei 77 enthält Mapping-Regeln, die in der Design-Phase aus den Eingangdokumentensdaten 105 und/oder einem, ggf. zu neu erstellenden Design-Datensatz-62 und/oder aus eingangsdaten-spezifischen Hilfsdateien 119 gebildet werden. Sowohl der Design-Datensatz-62 als auch die Regeldatei 77 können frei editierbar sein. Der Design-Datensatz 62 kann aus dem Eingangsdokumentendatenstrom, 105 und/oder aus eingangsdaten-spezifischen Hilfsdateien 119 gebildet werden und zusätzlich bei der Bildung eines Dokumententemplates 112 verwendet werden, das die Formatierung des normierten Datenstroms 104 (in Stufe 113) steuert. Wie mit den Pfeilen A₁ und A₂ dargestellt, kann der Design-Datensatz 62 und aus diesem die Regeldatei 77 auch aus dem Dokumententemplate 112 erzeugt werden.

Alternativ dazu kann die Regeldatei 77 auch direkt aus dem Eingangsdokumentendatenstrom oder anderen Datei-Informationen aus Hilfsdateien gewonnen werden.

Die in der Regeldatei 77 angegebenen Mapping-Regeln sind spezifisch für den Eingangsdokumentenddatenstrom 105. Sie geben an, welches Element des Eingangsdokumentendatenstroms 105 zu welchem Element des Design-Datensatzes zuzuordnen ist. Der Design-Datensatz 62 enthält die Strukturdefinition der normierten Daten, wobei Typ-Deklarationen vorgesehen sind für verschiedene Strukurelemente, z.B. für Kundennummern, Namen, Logos usw. In den normierten Rohdaten 104 können dann auch Datengruppen gebildet werden, die zusammengehören, insbesondere all diejenigen Daten , die zu einem Dokument gehören. Somit sind für jedes Dokument alle dazugehörigen Daten im normierten Rohdatenstrom 104 verfügbar. Ein Dokumenten-Template 112 dient als Strukturvorlage für die zu erzeugenden Dokumente und beschreibt, welche Formatierungsanweisungen im normierten Datenstrom hinzuzufügen sind. Es kann Elemente aus dem Design-Datensatz 62 enthalten und/oder frei programmierte statische oder dynamische Elemente 96 93, 15 enthalten (siehe Fig. 10). Das Documenten-Template 112 ist somit dokumentenformatierungsabhängig und dient dazu, die Formatbildungseinrichtung 113 (Formatter oder document composition engine) zu steuern. Aus dem normierten Rohdatenstrom 104 wird durch die Formatierungsbildungseinrichtung 113 dokumentenweise ein ressourcen-orientierter Datenstrom gebildet. Soweit bereits in den Rohdaten Formatierungen enthalten waren, werden diese beibehalten und soweit die Rohdaten unformatiert sind und im Dokumenten-Template zu den entsprechenden Datenfeldern Formatierungsangaben enthalten sind, werden diese ressourcen-orientiert in der Formatbildungseinrichtung 113 hinzugefügt, wobei Ressourcen, die mehrfach innerhalb eines Datenstromes benötigt werden performance optimiert weiterverarbeitet werden, d.h., im ressourcen-orientierten Datenstrom hauptsächlich durch Aufrufen der Ressourcen eingefügt werden, wobei die Ressourcen selbst nur einmal intern vorhanden sind, oder extern von einer Ressourcen-Datei geladen oder auch nur referenziert werden können. Zur Bearbeitung von Dokumenten-Template112, Design-Datensatz 62 und Regeldatei 77 kann es vorteilhaft sein, diese Dateien in der Weise zu koppeln, daß eine Veränderung in einer der Dateien zu einer Konsistenz-Prüfung und ggf. Modifikation in den beiden anderen Dateien führt.

Der formatierte Dokumentendatenstrom 114 wird dann einer Backend-Einrichtung 118 zugeführt, in der er in den durch eine Ausgabeselektionsdatei 119 gesteuerte Ausgabesprache wahlweise als Druckdatenstrom 120 oder über eine Schnittstelle 121 für ein Ausgabegerät (Telefax, email-Server, www-Server, Monitor) aufbereitet wird. Desgleichen kann der normierte Datenstrom 104 und/oder der formatierte Datenstrom 114 bereits gerätespezifisch optimiert werden.

Die Erfindung wurde anhand von Ausführungsbeispielen beschrieben. Dabei ist klar, daß der Fachmann jederzeit Abwandlungen angeben kann. Insbesondere sind die genannten Druckdatensprachen nur beispielhaft zu verstehen, da diese sich stetig weiterentwickeln wie zum Anmeldezeitpunkt der vorliegenden Anmeldung an den beiden Druckdatensprachen Extensible Mark-up language (XML) und Personalized Printer Mark-up Language (PPML) deutlich wird.

Die Erfindung ist insbesondere als Computerprogramm realisierbar, das bei einem Ablauf auf einem Computer einen erfindungsgemäßen Verfahrensablauf bewir. Dabei ist klar, daß entsprechende Computerprogramm-elemente bzw. Computerprogramm-Produkte, wie beispielsweise Datenträger, flüchtige und nicht flüchtige Speicher, die erfindungsgemäße Programme speichern sowie Übertragungsmittel, wie z. B. Netzwerk-Komponenten, die die erfindungsgemäßen Programme übertragen, Ausgestaltungen der Erfindung sein können.

### Bezugszeichenliste

- 1a...1c: erste Gruppe von Dokumenten
- 2a...2c: zweite Gruppe von Dokumenten
- 3a...3c: mailpieces (Sendungen)
- 3: Host Computer
- 4: Bearbeitungscomputer (File Server)
- 5: Netzwerk-Architektur
- 6: Ausgabegerät
- 7: Überwachungssystem
- 7a: Überwachungscomputer
- 7b: Datenbank
- 7c: Computerprogramm-Modul
- 8: Print Manager
- 9: Konverter
- 10a, 10b: Lesestation
- 11a, 11b: Hand-Barcodeleser
- 12, 12a: Client-Computer (Anwendernetzwerk)
- 13: Netzwerk für Client
- 14a...14d: Druckdatenleitung
- 15: Gerätesteuerungsnetzwerk
- 16: Druckserver
- 16a: Bildschirm
- 17: Testsystem
- 17b: Barcode Testsystem
- 17c: MICR-Testsystem
- 17d: Datenerfassungs-Modul
- 18a: Schneidegerät
- 18b: Kuvertierer
- 19: Druckgut
- 20: Formatierungs-Computerprogramm

- 23: gedruckte Dokumente

- 25: Druckdatenquelle
- 26: Editor
- 27: AFP-Ressourcen-Datenstrom
- 28: Print Server
- 29: Druckdatenweg
- 30: "Muster"-Weg
- 31: Druckgerät
- 32: Druckgerät

- 35: Formatter
- 36: AFP-Kanal
- 37: Data Enrichment Kanal

- 40: SAP-Datenbankanwendungen
- 41: SAP-Ausgabedaten-Management-System
- 42: SAP-Schnittstelle
- 43: Druckproduktionssystem
- 44: Auftragsverteilungssystem
- 45: Druckauftragsmanager
- 46: Druckauftragsbegleitdatei
- 47: Datenerweiterungs-Modul
- 48: Designer-Computerprogramm
- 49: Dokumenten-Generator-Computerprogramm
- 50: SAP-Anwenderdatenbank
- 51: Erweiterungsdaten
- 52: Personalisierte Dokumente
- 53: Druckdatei
- 54: Spool-Computerprogramm
- 55: Druckdaten
- 56: Druckertreiber

- 60: Probedatensatz
- 61: Import-Modul
- 62: Designdatensatz
- 63: Design-Informations-Datei
- 64: Applikationsdatensatz
- 65: Übersetzung
- 66: Applikationsdatensatz mit internen Datenformat
- 67: Formatter-Computerprogramm-Modul
- 68: Personalisiertes Dokument
- 69: Transformations-Modul
- 70: Druckdatei
- 71: RDI-Dokument-Daten
- 72: SAP Script-Daten
- 73: AFP-Daten
- 74: Seitenabfolgen und Tabellen
- 75: Layout-Zuordnungen
- 76: Ressourcen
- 77: Regeldatei
- 78: Datentrennvorgang
- 79: Tabellendaten-Beispiel
- 80: Zeilendaten-Beispiel
- 81: Tabellenlayout
- 82: Seitenlayout
- 83: RDI Konverter-Information
- 84: RDI Produktionsdaten
- 85: Datentrennvorgang
- 86: Zeilendaten
- 87: Tabellendaten
- 88: Tabellenformatierung
- 89: AFP-Datendatei
- 90: dynamische Seite
- 91: Rahmenseite
- 92: Dokument
- 93: Komponenten
- 94: Obersetzungsstufe
- 95: Text-Komponente
- 96: Barcode-Komponente
- 97a: erste Seite vom ersten Dokument
- 97b: zweite Seite vom ersten Dokument
- 98a: erste Seite vom zweiten Dokument
- 98b: zweite Seite vom zweiten Dokument
- 99a: erster Barcode
- 99b: zweiter Barcode
- 100: Mini Spool-Softproof-Computerprogramm
- 101: gerasterter Datenstrom
- 102: PCL Datenstrom-Generator
- 103: Druckdatei
- 104: normiertem Rohdaten
- 105: Eingangsdokumentendatenstrom
- 106: Ausgangsdokumentendatenstrom
- 107: Daten-Umwandlung
- 108: Daten-Formatierung
- 109: Seitenspezifische Formatierung
- 110: Dokumentenspezifische Formatierung
- 111: Daten-Umwandlung
- 112: Dokumenten-Template
- 113: Formatbildungseinrichtung
- 114: Formatierter Dokumentendatenstrom
- 115: PPML-Daten
- 116: Seitenextraktions-Modul
- 117: Ausschießprogramm
- 118: Backend-Einrichtung
- 119: Hilfsdatei
- A₁: erster Regelbezugspfeil
- A₂: zweiter Regelbezugspfeil

## Patentansprüche

1. Verfahren zum Umwandeln eines Eingangs-Dokumentendatenstroms (105), der einem von mehreren möglichen Eingangsdatenformaten (AFP, MO:DCA, Line Data, CSV, RDI) entspricht, in einen Ausgangs-Dokumentendatenstrom (106), der einem aus mehreren Ausgangsdatenformaten (AFP, MO:DCA, PCL, PostScript) entspricht, wobei der Eingangs-Dokumenten-Datenstrom (105) in ein internes Datenformat (66) umgesetzt wird, den Daten im internen Datenformat (66) bedarfsweise eine Dokumentenformatierungsinformation hinzugefügt wird, die die Darstellung der Daten im Ausgangsformat festlegt, und die Daten dann in das Ausgangs-Datenformat umgewandelt werden und **dadurch gekennzeichnet, daß** zur formatangepassten und geschwindigkeitsoptimierten Verarbeitung des Eingangs-Dokumentendatenstroms (105) der EingangsDokumentendatenstrom (105) in ein internes. Datenformat. (66) mit formatierten Daten, die Formatangaben enthalten und Rohdaten, die keine Formatangaben enthalten, umgewandelt wird.

2. Verfahren nach Anspruch 1, wobei den Daten im internen Datenformat (66) die Dokumentenformatierungsinformation durch ein Dokumenten-Template gesteuert hinzugefügt wird.

3. Verfahren nach Anspruch 1 oder 2, wobei durch die Datenumwandlung eine formatangepasste und geschwindigkeitsoptimierte Verarbeitung des Eingangs-Dokumentendatenstroms (105) erfolgt.

4. Verfahren nach Anspruch 3, wobei den Rohdaten mittels vorgegebener Regeln Formatierungsdaten hinzugefügt werden und aus den Daten des internen Datenformats ein Ausgangsdatenstrom (106) gebildet wird, der ein vorgegebenes Format hat.

5. Verfahren nach Anspruch 2 oder nach Anspruch 2 in Verbindung mit einem der Ansprüche 3 bis 4, wobei das Dokumenten-Template (112) unter Verwendung eines Design-Datensatzes (62) gebildet wird und die Umwandlung in das interne Datenformat (66) durch Regeln, die den Design-Datensatz (62) verwenden, erfolgt.

6. Verfahren nach den Anspruch 2 oder Anspruch 2 in Verbindung mit einem der Ansprüche 3 bis 5, wobei das Dokumenten-Template (112) unter Verwendung von frei programmierten statischen oder dynamischen Elementen erzeugt wird.

7. Verfahren nach einem der vorhergehenden Ansprüche, wobei in einer ersten, vorbereitenden Designphase dem Design-Datensatz feldweise Typen zugeordnet werden, wobei einer ersten Typengruppe Formatierungsanweisungen zugeordnet werden und einer zweiten Typengruppe keine Formatierung und wobei in einer zweiten, produktiven Verarbeitungsphase alle Datensätze des Eingangsdokumentendatenstroms typweise untersucht werden und Daten, die der ersten Typengruppe zuzuordnen sind, zusätzlich formatiert werden und Daten, die der zweiten Typengruppe zugeordnet werden, keine zusätzliche Formatierung erhalten.

8. Verfahren nach einem der vorhergehenden Ansprüche, wobei in der Design-Phase eine frei definierbare Regeldatei (77) gebildet wird, deren Mapping-Regeln aus dem Designsatz (62), aus den Eingangsdokumentendaten (105) und/oder aus sonstigen Regeln aus Hilfsdateien (119) automatisiert und/oder frei editierbar abgeleitet werden.

9. Verfahren nach den Ansprüchen 6 und 8, wobei die Aufstellung der Formatierregeln während der Design-Zeit erfolgt, wobei insbesondere ein Dokumenten-Template gebildet wird.

10. Verfahren nach einem der vorhergehenden Ansprüche, wobei die formatierten Daten in ein insbesondere gerätespezifisches Ausgangs-Datenformat umgewandelt werden.

11. Verfahren nach einem der vorherigen Ansprüche, wobei bei der Verarbeitung der normierten Datenstrom (104) und/oder der formatierte Datenstrom (114) gerätespezifisch optimiert wird.

12. Verfahren nach einem der vorhergehenden Ansprüchen, wobei das Eingangsdatenformat (105), das Ausgangsdatenformat (106) und/oder die hinzugefügte Dokumentenformatierungsinformation auswählbar ist.

13. Verfahren nach einem der vorhergehenden Ansprüche, wobei in einer ersten Formatierungsstufe vorformatierte Daten verarbeitet werden und in einer zweiten Verarbeitungsstufe Rohdaten.

14. Verfahren nach Anspruch 13, wobei die Rohdaten in der zweiten Verarbeitungsstufe in Komponenten (93, 95, 96) insbesondere mehrfach verwendet werden.

15. Verfahren nach Anspruch 14, wobei eine Komponente grafische Elemente (96) und/oder Indizierungsinformationen umfasst.

16. Verfahren nach einem der vorhergehenden Ansprüche, wobei die Dokumentenformatierungsinformation eine Papierwiedergabeinformation (N-up, duplex, impositioning) umfasst.

17. Verfahren nach einem der vorhergehenden Ansprüche, wobei die Dokumentenformatierungsinformation eine Druckvor- und/oder nachverarbeitungsinformation enthält.

18. Verfahren nach einem der vorhergehenden Ansprüche, wobei der Eingangsdatenstrom ein SAP/RDI-Datenstrom, ein Line Data-Datenstrom oder ein Metacode-Datenstrom ist.

19. Verfahren nach einem der vorhergehenden Ansprüche, wobei der Ausgangs-Dokumentendatenstrom (106) ein Advanced Function Presentation Datenstrom ist, bei dem eine erste Gruppe von Formatierungsinformationen über eine pagedef-Datei zur Verfügung gestellt wird und eine zweite Gruppe von Formatierungsinformationen im Eingangsdokumentendatenstrom (105) und/oder im normierten Rohdatenstrom (104) enthalten ist.

20. Verfahren nach einem der vorhergehenden Ansprüche, wobei aus dem normierten Ausgangs-Dokumentendatenstrom Ansteuersignale für ein Anzeigemedium (16a) oder einen ein Anzeigemedium enthaltenden Computer (12) gebildet werden.

21. Verfahren nach einem der vorhergehenden Ansprüche, wobei der Ausgangs-Dokumentendatenstrom (106, 120, 121) auf einem Anzeigemedium (16a), insbesondere in aufgerasterter Weise (101) dargestellt wird und derart editierbar ist, dass vorgenommene Veränderungen das Dokumenten-Template ändern und damit auf den ungerasterten Ausgangs-Dokumentendatenstrom (106, 120, 121) zurückwirken.

22. Verfahren nach einem der vorhergehenden Ansprüche, wobei der Ausgangs-Dokumentendatenstrom (106), insbesondere nach Durchlaufen eines ausgabegeräteangepassten Konvertierungsprozesses, auf einem email-System (12), einem Faxgerät und/oder einem Internet-Server ausgegeben wird.

23. Vorrichtung zum Durchführen eines Verfahrens nach einem der Ansprüche 1 bis 22.

24. Vorrichtung nach Anspruch 23, umfassend einen Computer (3, 12, 12a, 16).

25. Dokumentenverarbeitungssystem umfassend eine Vorrichtung nach einem der Ansprüche 23 oder 24.

26. Dokumentenverarbeitungssystem nach Anspruch 25, umfassend ein Drucksystem.

27. Computerprogrammprodukt, mit dem bei seinem Ablauf auf einem Computer ein Verfahren nach einem der Ansprüche 1 bis 22 bewirkt wird.

## Claims

1. A method for the conversion of an input document data stream (105) that corresponds to one of several possible input data formats (AFP, MO:DCA, line data, CSV, RDI) into an output document data stream (106) that corresponds to one of several possible output data formats (AFP, MO:DCA, PCL, PostScript), wherein the input document data stream (105) is converted into an internal data format (66), document formatting information that establishes the representation of the data in the output format is added as needed to the data in the internal data format (66), and the data are then converted into the output data format, and **characterized in that** the input document data stream (105) is converted into an internal data format (66), with formatted data that contain format specifications and raw data that contain no format specifications, for format-adapted and speed-optimized processing of the input document data stream (105).

2. The method according to claim 1, wherein the document formatting information is added in a controlled fashion by a document template to the data in the internal data format (66).

3. The method according to claim 1 or 2, wherein a format-adapted and speed-optimized processing of the input document data stream (105) takes place by means of the data conversion.

4. The method according to claim 3, wherein formatting data are added to the raw data by means of predetermined rules and an output data stream (106) that has a predetermined format is formed from the data of the internal data format.

5. The method according to claim 2 or according to claim 2 in connection with any of the claims 3 to 4, wherein the document template (112) is formed using a design data set (62) and the conversion into the internal data format (66) occurs via rules that use the design data set (62).

6. The method according to claim 2 or claim 2 in connection with one of the claims 3 to 5, wherein the document template (112) is generated using free programmed static or dynamic elements.

7. The method according to any of the preceding claims, wherein types are associated per field with the design data set in a first, preparatory design phase, wherein formatting instructions are associated with a first type group and no formatting is associated with a second type group, and wherein in a second, productive processing phase all data sets of the input document data stream are examined by type and data that are to be associated with the first type group are additionally formatted and data that are associated with the second type group receive no additional formatting.

8. The method according to any of the preceding claims, wherein a freely definable rule file (77) is formed in the design phase, the mapping rules of which rule file (77) are automatically derived and/or derived such that they are freely editable from the design set (62), from the input document data (105) and/or from other rules from auxiliary files (119).

9. The method according to the claims 6 and 8, wherein the assembly of the formatting rules occurs during the design time, wherein in particular a document template is formed.

10. The method according to any of the preceding claims, wherein the formatted data are converted into an in particular device-specific output data format.

11. The method according to any of the previous claims, wherein the normalized data stream (104) and/or the formatted data stream (114) are device-specifically optimized in the processing.

12. The method according to any of the preceding claims, wherein the input data format (105), the output data format (106) and/or the document formatting information to be added are selectable.

13. The method according to any of the preceding claims, wherein pre-formatted data are processed in a first formatting stage and raw data are processed in a second processing stage.

14. The method according to claim 13, wherein the raw data in particular are used multiple times in components (93, 95, 96) in the second processing stage.

15. The method according to claim 14, wherein a component comprises graphical elements (96) and/or indexing information.

16. The method according to any of the preceding claims, wherein the document formatting information comprises paper reproduction information (N-up, duplex, impositioning).

17. The method according to any of the preceding claims, wherein the document formatting information comprises print pre- and/or post-processing information.

18. The method according to any of the preceding claims, wherein the input data stream is an SAP/RDI data stream, a line data data stream or a metacode data stream.

19. The method according to any of the preceding claims, wherein the output document data stream (106) is an Advanced Function Presentation data stream in which a first group of formatting information is provided via a pagedef file and a second group of formatting information is contained in the input document data stream (105) and/or in the normalized raw data stream (104).

20. The method according to any of the preceding claims, wherein activation signals for a display medium (16a) or a computer (12) comprising a display medium are formed from the normalized output document data stream.

21. The method according to any of the preceding claims, wherein the output document data stream (106, 120, 121) is represented on a display medium (16a) in particular in a rastered manner (101), and can be edited such that effected changes change the document template and thus retroact on the unrastered output document data stream (106, 120, 121).

22. The method according to any of the preceding claims, wherein the output document data stream (106) is output to an e-mail system (12), a fax device and/or an Internet server, in particular after passing through an output device-adapted conversion process.

23. A device for the implementation of a method according to any of the claims 1 to 22.

24. The device according to claim 23, comprising a computer (3, 12, 12a, 16).

25. A document processing system comprising a device according to any of the claims 23 or 24.

26. The document processing system according to claim 25, comprising a printing system.

27. A computer program product with which a method according to one of the claims 1 to 22 is effected upon its execution on a computer.

## Revendications

1. Procédé de conversion d'un flot de données de documents d'entrée. (105), qui correspond à l'un de plusieurs formats de données d'entrée possibles (AFP, MO : DCA, données en ligne, CSV, RDI), en un flot de données de documents de sortie (106), qui correspond à l'un de plusieurs formats de données de sortie (AFP, MO : DCA, PCL, PostScript), dans lequel le flot de données de documents d'entrée (105) est converti dans un format de données interne (66), et au besoin, on ajoute aux données dans le format de données interne (66) des informations de formatage du document, qui définissent la représentation des données dans le format de sortie, puis les données sont converties dans le format de données de sortie, **caractérisé en ce que**, pour réaliser un traitement adapté au format et optimisé en termes de vitesse du flot de données de documents d'entrée (105), le flot de données de documents d'entrée (105) est converti dans un format de données interne (66) avec des données formatées, qui contiennent des indications de format et des données brutes, qui ne contiennent pas d'indication de format.

2. Procédé selon la revendication 1, dans lequel, aux données dans le format de données interne (66), on ajoute les informations de formatage de document de manière pilotée par un modèle de documents.

3. Procédé selon la revendication 1 ou 2, dans lequel, grâce à la conversion de données, on obtient un traitement adapté au format et optimisé en termes de vitesse du flot de données de documents d'entrée (105).

4. Procédé selon la revendication 3, dans lequel, aux données brutes, à l'aide de règles prédéfinies, on ajoute des données de formatage et, à partir des données du format de données interne, on forme un flot de données de sortie (106), qui a un format prédéfini.

5. Procédé selon la revendication 2 ou selon la revendication 2 combinée à l'une des revendications 3 et 4, dans lequel le modèle de document (112) est formé en utilisant un jeu de données de conception (62), et la conversion dans le format de données interne (66) est réalisée grâce à des règles qui utilisent le jeu de données de conception (62).

6. Procédé selon la revendication 2 ou la revendication 2 combinée à l'une des revendications 3 à 5, dans lequel le modèle de document (112) est produit en utilisant des éléments dynamiques ou statiques programmés librement.

7. Procédé selon l'une quelconque des revendications précédentes, dans lequel, dans une première phase de conception préparatoire, au jeu de données de conception sont affectés des types correspondant à des champs, moyennant quoi, à un premier groupe de types, on affecte des spécifications de formatage et à un deuxième groupe de types, on n'affecte aucun formatage, et moyennant quoi, dans une deuxième phase de traitement productive, l'ensemble des jeux de données du flot de données d'entrée sont examinés par type, et les données qui doivent être affectées au premier groupe de types sont en outre formatées tandis que les données qui sont affectées au deuxième groupe de types ne font pas l'objet d'un formatage supplémentaire.

8. Procédé selon l'une quelconque des revendications précédentes, dans lequel, dans une phase de conception, on génère un fichier de règles (77) pouvant être défini librement, dont les règles de structuration sont déduites, de manière automatisée, et/ou en pouvant être éditées librement, du jeu de données de conception (62), des données de documents d'entrée (105) et/ou d'autres règles provenant de fichiers d'aide (119).

9. Procédé selon l'une quelconque des revendications 6 et 8, dans lequel l'établissement des règles de formatage est réalisé pendant la période de conception, moyennant quoi en particulier, un modèle de document est établi.

10. Procédé selon l'une quelconque des revendications précédentes, dans lequel les données formatées sont converties dans un format de données de sortie, en particulier spécifique à l'appareil.

11. Procédé selon l'une quelconque des revendications précédentes, dans lequel, lors du traitement, le flot de données normé (104) et/ou le flot de données formaté (114) est optimisé de manière spécifique à l'appareil.

12. Procédé selon l'une quelconque des revendications précédentes, dans lequel le format de données d'entrée (105), le format de données de sortie (106) et/ou les informations de formatage de document ajoutes peuvent être choisis.

13. Procédé selon l'une quelconque des revendications précédentes, dans lequel, dans une première étape de formatage, les données préformatées sont traitées et, dans une deuxième étape de traitement, les données brutes sont traitées.

14. Procédé selon la revendication 13, dans lequel les données brutes sont utilisées dans la deuxième étape de traitement dans les composants (93, 95, 96), en particulier à plusieurs reprises.

15. Procédé selon la revendication 14, dans lequel un composant comporte des éléments graphiques (96) et/ou des informations d'indexation.

16. Procédé selon l'une quelconque des revendications précédentes, dans lequel les informations de formatage du document comportent des informations de transfert sur papier (N-up, duplex, imposition).

17. Procédé selon l'une quelconque des revendications précédentes, dans lequel les informations de formatage du document comportent des informations de prétraitement ou de post-traitement pour l'impression.

18. Procédé selon l'une quelconque des revendications précédentes, dans lequel le flot de données d'entrée est un flot de données SAP/RDI, un flot de données en ligne, ou un flot de données métacode.

19. Procédé selon l'une quelconque des revendications précédentes, dans lequel le flot de données de documents de sortie (106) est un flot de données Advanced Function Presentation (présentation de fonctions avancées), dans lequel un premier groupe d'informations de formatage est fourni par l'intermédiaire d'un fichier pagedef, et un deuxième groupe d'informations de formatage est contenu dans le flot de données de documents d'entrée (105) et/ou dans le flot de données brutes (104) normé.

20. Procédé selon l'une quelconque des revendications précédentes, dans lequel, à partir du flot de données de documents de sortie normé, on génère des signaux de commande pour un support d'affichage (16a) ou un ordinateur (12) contenant un support d'affichage.

21. Procédé selon l'une quelconque des revendications précédentes, dans lequel le flot de données de documents de sortie (106, 120, 121) est représenté sur un support d'affichage (16a), en particulier de manière matricielle (101), et édité de telle sorte que les modifications réalisées modifient le modèle de document et ont un effet rétroactif sur le flot de données de documents de sortie (106, 120, 121) non matriciel.

22. Procédé selon l'une quelconque des revendications précédentes, dans lequel le flot de données de documents de sortie (106), en particulier après le déroulement d'un processus de conversion adapté à l'appareil de sortie, est émis sur un système d'e-mail (12), un fax et/ou un serveur Internet.

23. Dispositif permettant de mettre en oeuvre un procédé selon l'une quelconque des revendications 1 à 22.

24. Dispositif selon la revendication 23, comportant un ordinateur (3, 12, 12a, 16).

25. Système de traitement de documents comportant un dispositif selon l'une des revendications 23 ou 24.

26. Système de traitement de documents selon la revendication 25, comportant un système d'impression.

27. Produit de programme informatique, grâce auquel, lors de son exécution sur un ordinateur, un procédé selon l'une quelconque des revendications 1 à 22 est mis en oeuvre.
